# EUROPÄISCHE PATENTSCHRIFT

(11) **EP 4 638 046 B1**
(45) Veröffentlichungstag und Bekanntmachung des Hinweises auf die Patenterteilung: **14.10.2026**
(21) Anmeldenummer: 23821662.6
(22) Anmeldetag: 12.12.2023
(51) Int. Cl.: B23F 5/04, B23F 19/00, B23F 21/02

(54) **VERFAHREN UND VORRICHTUNG ZUR ERZEUGUNG EINER MODIFIZIERTEN OBERFLÄCHENSTRUKTUR AUF EINER ZAHNFLANKE**
METHOD AND APPARATUS FOR GENERATING A MODIFIED SURFACE STRUCTURE ON A TOOTH FLANK
PROCÉDÉ ET APPAREIL POUR GÉNÉRER UNE STRUCTURE DE SURFACE MODIFIÉE SUR UN FLANC DE DENT

(30) Priorität: 19.12.2022 CH 15182022
(43) Veröffentlichungstag der Anmeldung: 29.10.2025
(73) Patentinhaber: Reishauer AG, 8304 Wallisellen (CH)
(72) Erfinder: LEONHARDT, Christoph, 8304 Wallisellen (CH)
(74) Vertreter: Mayer, Aline Sophie
(86) Internationale Anmeldenummer: PCT/EP2023/085369
(87) Internationale Veröffentlichungsnummer: WO 2024/132706

(56) Entgegenhaltungen:
- DE-A1- 102012 006 581
- US-A1- 2013 280 990
- US-A1- 2014 256 223
- US-A1- 2019 314 913

## Beschreibung

### TECHNISCHES GEBIET

Die vorliegende Erfindung betrifft ein Verfahren zur Erzeugung einer modifizierten Oberflächenstruktur auf einer Zahnflanke eines vorverzahnten Werkstücks. Die Erfindung betrifft des Weiteren eine Werkzeugmaschine, die dazu hergerichtet ist, ein solches Verfahren auszuführen.

### STAND DER TECHNIK

Insbesondere im Kontext der Elektromobiliät gewinnt das Thema NVH (Noise-Vibration-Harshness) speziell im Bereich des Getriebes eines Fahrzeugs aufgrund der fehlenden dominanten Geräuschkulisse des Verbrennungsmotors an Bedeutung. Die Anforderungen an das Geräuschanregungsverhalten werden häufig in Form von vordefinierten Grenzwerten in einem Geräuschfrequenzspektrum vorgegeben. Ob ein Werkstück diesen Anforderungen genügt, wird in der Regel stichprobenartig auf einem End-of-Line-Prüfstand (EOL) überprüft. Liegen die gemessenen Amplituden vereinzelter Geräuschfrequenzen über dem vordefinierten Grenzwert, wird das entsprechende Werkstück beanstandet.

Ein typisches Geräuschfrequenzspektrum eines rotierenden Zahnrades weist dominante Amplituden bei Geräuschfrequenzen auf, welche der Zahneingriffsfrequenz (f_{ZE} = Zahnraddrehfrequenz x Zähnezahl) und den dazugehörigen höheren Harmonischen entsprechen. Diese dominanten Geräuschfrequenzen resultieren in der Regel aus Drehwegabweichungen, welche infolge einer über die Eingriffsstrecke variierende Eingriffssteifigkeit entstehen. Der Verlauf der Eingriffssteifigkeit als Funktion der Position entlang der Eingriffsstrecke wiederholt sich periodisch mit der Eingriffsteilung und führt zu den oben genannten dominanten Geräuschfrequenzen. Eine andere Ursache kann ein während der Fertigung entstandenes "Wälzloch", d.h. bezüglich der gewünschten Profillinie zurückstehendes Material, sein.

Insgesamt können alle Drehwegabweichungen einer Verzahnung unter Last zu einer Geräuschanregung führen, die als störendes Geräusch wahrnehmbar ist. Weist beispielsweise ein Abrichtwerkzeug über die Profilhöhe eine gewisse Welligkeit auf, überträgt sich diese auf die Schneckenflanke und führt anschliessend zu einer Profilformabweichung am Werkstück.

Konstante Schwingungen in der Peripherie der zur Bearbeitung des vorverzahnten Werkstücks verwendeten Werkzeugmaschine können ebenfalls zu Zahnflankenwelligkeiten auf der Zahnflanke führen, die messtechnisch erfassbar sind und störende Geräuscheigenschaften der Verzahnung zur Folge haben.

Auch über die Breite der Verzahnung verlaufende Riefen können zu einer Geräuschanregung führen. Insgesamt kann jede periodische Oberflächenstruktur, insbesondere in einer Richtung senkrecht zur Eingriffslinie gepaarter Stirnräder, zu einer Anregung einer Geräuschfrequenz führen, welche im Geräuschfrequenzspektrum der Verzahnung dominant auftritt.

Es existieren mehrere Ansätze, um das Geräuschanregungsverhalten einer Verzahnung zu verbessern. Drehwegabweichungen, die aus einer Verformung der Verzahnung unter Last resultieren, können effektiv durch eine Modifikation der Zahnflanke reduziert werden. Ein Wälzloch kann durch eine optimierte Prozessführung nahezu vollständig beseitigt werden.

DE 10 2012 015 846 A1 offenbart ein Wälzschleifverfahren, bei dem ein Werkstück mit einer Schleifschnecke bearbeitet wird, wobei mittels gezielter Erzeugung einer unwuchtbedingten Taumelbewegung der Schleifschnecke und/oder einer Exzentrizität der Schleifschnecke erreicht wird, dass eine Modifikation, insbesondere eine Profilmodifikation oder Profilwelligkeit und/oder eine definierte periodische Flankenwelligkeit, auf der aktiven Oberfläche des damit bearbeiteten Werkstückes erzeugt wird, um eine ungewollte Flankenwelligkeit zu modifizieren oder zu verhindern.

Eine aus Unwucht oder Exzentrizität einer Schleifschnecke resultierende Flankenwelligkeit auf dem Werkstück hat stets bezüglich der Schneckendrehfrequenz die Ordnung eins, d.h. es ist nicht möglich, auf diese Weise eine Flankenwelligkeit zu erzeugen, welche bezüglich der Schneckendrehfrequenz eine höhere Ordnung aufweist.

US 2014/256223 A1 offenbart ein Verfahren zur Herstellung einer geräuschoptimierten Verzahnung mit Zahnflankenmodifikationen in Form von Welligkeiten auf den Zahnflanken, wobei jeweils Zahnradpaarungen, die miteinander innerhalb eines Getriebes oder einer Prüfeinrichtung im Eingriff sind, unter Berücksichtigung der jeweiligen Gegenflanken bearbeitet werden. Dabei werden mittels Drehwegfehlermessung der Zahnradpaarungen in einer Verzahnungsmesseinrichtung und/oder Getriebe der Drehfehlerverlauf bestimmt. Dieses Messergebnis dient als Eingangsgrösse zur Definition der Amplitude, Frequenz und Phasenlage für die periodischen Flankenwelligkeitskorrekturen auf den Zahnflanken der Zahnradpaarungen für die Fertigung in der Verzahnungsmaschine.

Eine sich periodisch wiederholende Oberflächenstruktur führt tendenziell zu einer Anregung in einem relativ engen Geräuschfrequenzband. Eine möglichst unregelmässige Oberflächenstruktur führt wiederum zu einem sehr breiten Geräuschfrequenzspektrum, das sich "weissem" Rauschen, d.h. einem Geräuschfrequenzspektrum mit gleicher Amplitude aller Geräuschfrequenzen, annähert. Ein derartiges Geräuschfrequenzspektrum, bei welchem tendenziell die Dominanz einzelner Geräuschfrequenzen reduziert ist, wird psychoakustisch als weniger störend wahrgenommen und ist somit vorteilhaft. Zudem verteilt sich bei Anregungen mit einem breiten Geräuschfrequenzspektrum die gesamte Anregungsenergie über einen grossen Frequenzbereich, so dass die Geräuschamplitude jeder einzelnen Frequenzkomponente tendenziell niedriger ist als bei Anregungen in einem engen Frequenzband.

Wenn das Werkstück durch ein Wälzschleifverfahren mit einer Schleifschnecke bearbeitet wird, können sich periodisch wiederholende Oberflächenstrukturen auf einer Zahnflanke auftreten, die beispielsweise vom Abrichten der Schleifschnecke stammen, mit welcher die Zahnflanke bearbeitet wird: Die beim Abrichten verwendete Abrichtscheibe kann über den Umfang technologiebedingt Korngrössen- und Formunterschiede sowie eine unterschiedliche Kornverteilung aufweisen, was zu einem Abrichtmuster auf der Oberfläche der Abrichtscheibe führt. Da die Abrichtscheibe in der Regel während einer Umdrehung der Schleifschnecke eine Vielzahl von Umdrehungen ausführt, wird dieses Abrichtmuster beim Abrichten in Schneckengangrichtung periodisch auf die Schleifschnecke abgebildet. Beim anschliessenden Schleifen des Werkstücks können dann wiederum auf den Zahnflanken des Werkstücks periodische Schwankungen in der Zahnflankenoberfläche in Form von Riefen entstehen, welche sich über die Zahnbreite erstrecken.

DE 199 05 136 A1 offenbart ein Verfahren, bei welchem der Drehwinkel der Abrichtscheibe mit dem Drehwinkel der Schleifschnecke mit einem einstellbaren festen oder programmierbar variablen oder einem gespeicherten stochastisch ändernden Verhältnis gekoppelt wird, wobei die Schleifschnecke während des Schleifens längs ihrer Achse relativ zum Werkstück bewegt wird (Shift-Vorschub), so dass jedem Punkt der Zahnflanken der Verzahnung des Werkstücks genau ein Punkt der Flanken des Schleifschneckenganges entspricht.

Durch gezielte Wahl des Shift-Vorschubs können die oben genannten Riefen gebrochen werden. Somit wird zwar die Periodizität der Zahnflankenoberflächenstruktur gebrochen und dadurch prinzipiell ein angenehmeres Geräuschverhalten erzielt, allerdings ist die auf die Zahnflanke übertragene Struktur stark vom stochastischen Abrichtmuster auf der Oberfläche der Abrichtscheibe abhängig und kann daher während des Schleifens des Werkstücks nur über den Shift-Vorschub beeinflusst werden.

DE 10 2012 006581 A1 offenbart ein Wälz- oder Profilschleifverfahren Profilschleifverfahren, gemäß dem Oberbegriff des Anspruchs 1, zur Herstellung eines Werkstücks mit korrigierter Verzahnungsgeometrie, sowie ein Verfahren zum Abrichten des entsprechenden Schleifwerkzeuges, bei dem mittels des Abrichtwerkzeuges einzelne Profilbereiche des Schleifwerkzeuges freigelegt werden, die im anschliessenden Schleifhub nicht zu Eingriff kommen. Zur Erzeugung einer Welligkeit werden Zusatzbewegungen einer oder mehrerer am Schleifprozess beteiligter Maschinenachsen eingesetzt. Die Wiederholung der Schleifhübe mit der zugehörigen Zusatzbewegung erfolgt so lange, bis die gesamte Zahnflanke der Verzahnung bearbeitet worden ist. Durch die Verschiebung der Phasenlage der Welligkeit je Schleifhub wird ein phasenverschobenes Wellenmuster über der Profilhöhe bzw. Zahnbreite erzeugt.

Auf diese Weise eine besonders unregelmässige Oberflächenstruktur zu erzeugen ist allerdings zeitaufwändig, da entsprechend viele Schleifhübe durchgeführt werden müssen. Es besteht also der Bedarf nach einem Verfahren, welches es ermöglicht, die Oberflächenstruktur einer Zahnflanke gezielt zu modifizieren, derart, dass ein besonders geräuschoptimiertes Verhalten erzielt wird.

### DARSTELLUNG DER ERFINDUNG

In einem ersten Aspekt ist es eine Aufgabe der vorliegenden Erfindung, ein Verfahren zur Erzeugung einer modifizierten Oberflächenstruktur auf einer Zahnflanke eines vorverzahnten Werkstücks durch Wälzschleifen anzugeben, das eine Optimierung des Geräuschverhaltens ermöglicht.

Diese Aufgabe wird durch ein Verfahren nach Anspruch 1 gelöst. Weitere Ausführungsformen sind in den abhängigen Ansprüchen angegeben.

Es wird also ein Verfahren zur Erzeugung einer modifizierten Oberflächenstruktur auf einer Zahnflanke eines vorverzahnten Werkstücks vorgeschlagen, umfassend:
Antreiben einer Schleifschnecke zu einer Drehung um eine Schneckenachse;
Antreiben des vorverzahnten Werkstücks zu einer Drehung um eine Werkstückachse, wobei die Schleifschnecke und das vorverzahnte Werkstück in einem Wälzeingriff stehen, und
Erzeugen einer relativen Bewegung zwischen der Schleifschnecke und dem vorverzahnten Werkstück, wobei die relative Bewegung eine Axialkomponente parallel zur Werkstückachse aufweist, derart, dass auf der Zahnflanke des vorverzahnten Werkstücks eine Mehrzahl benachbarter Kontaktspuren entsteht, wobei die Kontaktspuren bezüglich einer Werkstück-Breitenrichtung zueinander beabstandet verlaufen.

Erfindungsgemäss wird eine Durchdringungstiefe zwischen der Schleifschnecke und dem vorverzahnten Werkstück entlang der jeweiligen Kontaktspur zur Erzeugung einer Zahnflankenwelligkeit mit einer Mehrzahl an Wellenperioden entlang besagter Kontaktspur gezielt variiert, derart, dass die resultierenden Zahnflankenwelligkeiten benachbarter Kontaktspuren an einer beliebigen vorgegebenen Position in einer Werkstück-Höhenrichtung, d.h. an einer beliebigen vorgegebenen Position über der Zahnhöhe oder, anders ausgedrückt, entlang einer beliebigen vorgegebenen Flankenlinie der Zahnflanke in Werkstück-Breitenrichtung betrachtet, um einen Phasenversatz zueinander verschoben sind,
wobei der Phasenversatz zwischen 90° und 270° beträgt, und/oder
wobei der Phasenversatz zu den jeweils benachbarten Kontaktspuren von Kontaktspur zu Kontaktspur variiert, und/oder
wobei der Phasenversatz zu den benachbarten Kontaktspuren entlang der jeweiligen Kontaktspur variiert.

Die beliebige vorgegebene Flankenlinie, bezüglich welcher der Phasenversatz im vorliegenden Kontext definiert ist, ergibt sich bei einem zylindrischen Werkstück als Schnittlinie zwischen der Zahnflanke und einem konzentrisch zur Werkstückachse angeordneten virtuellen Zylinder, welcher einen beliebigen vorgegebenen Radius aufweist, wobei dieser Radius einen Wert hat, der zwischen dem Wert des Fussformkreisradius und dem Wert des Kopfformkreisradius des verzahnten Werkstücks liegt. Diese Schnittlinie definiert eine bestimmte Position in Werkstück-Höhenrichtung, d.h. eine bestimmte Position über der Zahnhöhe. Bei einem konischen Werkstück wird die betreffende Flankenlinie im vorliegenden Kontext als Schnittlinie mit einem konzentrisch zur Werkstückachse angeordneten virtuellen Kegel definiert.

In einigen Ausführungsformen variiert der Phasenversatz zu den jeweils benachbarten Kontaktspuren von Kontaktspur zu Kontaktspur, d.h. dieser Phasenversatz ist von Kontaktspur zu Kontaktspur nicht konstant. Insbesondere kann sich der Phasenversatz zwischen den Zahnflankenwelligkeiten eines ersten Paares benachbarter Kontaktspuren von dem Phasenversatz zwischen den Zahnflankenwelligkeiten eines zweiten Paares benachbarter Kontaktspuren an einer anderen Position in Werkstück-Breitenrichtung unterscheiden.

In einigen Ausführungsformen variiert alternativ oder zusätzlich der Phasenversatz zu den jeweils benachbarten Kontaktspur entlang der jeweiligen Kontaktspur. Insbesondere können die Zahnflankenwelligkeiten benachbarter Kontaktspuren unterschiedliche Zahnflankenwelligkeitswellenlängen aufweisen, wodurch der Phasenversatz zwischen besagten benachbarten Kontaktspuren in Richtung der besagten Kontaktspuren variiert. Alternativ oder zusätzlich kann die Zahnflankenwelligkeit der jeweiligen Kontaktspur eine Zahnflankenwelligkeitswellenlänge aufweisen, welche entlang der jeweiligen Kontaktspur variiert. Dadurch kann ein zu den benachbarten Kontaktspuren variierender Phasenversatz entlang der jeweiligen Kontaktspur entstehen, sofern die Zahnflankenwelligkeitswellenlängen der benachbarten Kontaktspuren nicht ebenfalls "synchron" variieren.

Indem der Phasenversatz zu den jeweils benachbarten Kontaktspuren von Kontaktspur zu Kontaktspur oder entlang der jeweiligen Kontaktspur variiert, wird verhindert, dass entlang einer Kontaktspur auftretende Wellenberge und Wellentäler in Verbindung mit Wellenbergen und Wellentälern der benachbarten Kontaktspuren geradlinig verlaufende Wellenfronten (Linien gleicher Welligkeitsphasenlage) bilden. Eine Oberflächenstruktur mit nicht-geradlinig verlaufenden Wellenfronten ist hinsichtlich des daraus resultierenden Geräuschverhaltens vorteilhaft.

In einigen Ausführungsformen beträgt der Phasenversatz einer Kontaktspur zu den jeweils benachbarten Kontaktspuren zwischen 90° und 270°. Indem der Phasenversatz zwischen 90° und 270° beträgt, wird verhindert, dass entlang der Kontaktspur auftretende Wellenberge und Wellentäler in Verbindung mit Wellenbergen und Wellentälern der benachbarten Kontaktspuren kontinuierliche Wellenfronten bilden. Stattdessen entsteht eine gebrochene Oberflächenstruktur, welche sich hinsichtlich eines daraus resultierenden Geräuschverhaltens besonders vorteilhaft verhält.

Bei einer Zahnflankenwelligkeit mit festgelegter Periodizität kann beispielsweise mit einem Phasenversatz von 180° zur jeweils nächsten Kontaktspur gezielt eine schachbrettartige Oberflächenstruktur erzeugt werden. Eine solche Struktur kann, insbesondere bei einer Überlagerung mit nicht-kontrollierten, insbesondere stochastisch auftretenden, Abweichungen der Durchdringungstiefe, Vorteile hinsichtlich des Geräuschverhaltens bieten.

Ob die Zahnflankenwelligkeiten benachbarter Kontaktspuren um einen Phasenversatz zueinander verschoben sind oder nicht, kann davon abhängen, mit welcher Variationsfrequenz das Variieren der Durchdringungstiefe erfolgt. Während der Bearbeitung werden die auf der Zahnflanke benachbarten Kontaktspuren mit einer gewissen Erzeugungsfrequenz erzeugt. Sind sowohl die Variationsfrequenz als auch die Erzeugungsfrequenz jeweils konstant und beträgt die Variationsfrequenz ein ganzzahliges Vielfaches der Erzeugungsfrequenz, ergibt sich von Kontaktspur zu Kontaktspur entlang einer beliebigen Flankenlinie auf der Zahnflanke kein Phasenversatz. Ein Phasenversatz kann hingegen entstehen, wenn die Variationsfrequenz in einem nicht-ganzzahligen und/oder in einem nicht-konstanten Verhältnis zur Erzeugungsfrequenz steht.

Bevorzugt wird die Schleifschnecke laufend entlang einer Shift-Richtung parallel zur Schneckenachse verschoben. Dadurch weist die relative Bewegung zwischen der Schleifschnecke und dem vorverzahnten Werkstück zusätzlich eine Shift-Komponente parallel zur Schneckenachse auf. Durch den Shift-Vorschub (d.h. durch die Shift-Komponente der relativen Bewegung) führt die Schleifschnecke neben dem Durchwälzen aus der Rotation noch eine überlagerte zahnstangenartige Bewegung durch, wodurch die Erzeugungsfrequenz, mit welcher die Kontaktspuren erzeugt werden, verändert werden kann. Dies bedeutet, dass die Zahnflankenwelligkeitswellenlänge verzerrt werden kann (d.h. kleiner oder grösser werden kann je nach Shift-Richtung) und dass der Phasenversatz über die Shift-Komponente eingestellt werden kann. Insbesondere kann es sinnvoll sein, den Phasenversatz über die Shift-Komponente einzustellen, wenn die Variationsfrequenz nicht verändert werden kann oder soll, z.B. falls die Variationsfrequenz durch eine Unwucht der Schleifschnecke bestimmt ist oder von einer auf der Schleifschnecke aufgebrachten Gangwelligkeit herrührt und somit an eine möglicherweise fix zu haltende Schneckendrehfrequenz der Schleifschnecke gebunden sein kann.

In einer bevorzugten Variante des Verfahrens dreht sich die Schleifschnecke mit einer Schneckendrehfrequenz, und das gezielte Variieren der Durchdringungstiefe erfolgt mit einer Variationsfrequenz, welche grösser als die Schneckendrehfrequenz ist. Dies ermöglicht ein Einstellen des Phasenversatzes mit einem geringeren Shift-Vorschub als in einer Situation, in welcher die Variationsfrequenz der Schneckendrehfrequenz entspricht.

Bevorzugt wird die Variationsfrequenz im Vergleich zu einer Drehfrequenz des vorverzahnten Werkstücks derart hoch gewählt, dass die Zahnflankenwelligkeit entlang der jeweiligen Kontaktspuren eine Mehrzahl an Wellenperioden aufweist.

Das gezielte Variieren der Durchdringungstiefe kann auf verschiedene Arten erzeugt werden, wobei Kombinationen dieser Arten möglich sind.

Insbesondere kann das gezielte Variieren der Durchdringungstiefe umfassen:
Erzeugen einer gezielten relativen Zusatzbewegung zwischen dem vorverzahnten Werkstück und der Schleifschnecke.

Der Term "relative Zusatzbewegung" bezieht sich im vorliegenden Kontext auf Bewegungen, welche über die zur Erfüllung der Wälzbedingung notwendigen Bewegungen und über die relative Bewegung parallel zur Werkstückachse, welche zur Erzeugung benachbarter Kontaktspuren notwendig ist, hinausgehen.

Insbesondere bezieht sich der Term "relative Zusatzbewegungen" auf Bewegungen, die eine Komponente in Richtung einer Normalen der Zahnflanke des zu bearbeitenden Werkstücks haben.

Durch die gezielte relative Zusatzbewegung kann insbesondere eine Relativposition zwischen dem vorverzahnten Werkstück und der Schleifschnecke entlang einer Zustellrichtung radial zur Werkstückachse und/oder entlang einer Axialrichtung parallel zur Werkstückachse und/oder entlang einer Shift-Richtung entlang der Schneckenachse veränderlich sein.

Insbesondere kann die Schleifschnecke entlang einer Zustellrichtung radial zur Werkstückachse bewegbar sein, und das Erzeugen der gezielten relativen Zusatzbewegung kann umfassen:
Anregen einer translatorischen Schwingung der Schleifschnecke mit einer Schwingungskomponente in Zustellrichtung radial zur Werkstückachse.

Insbesondere falls das Werkstück eine Schrägverzahnung aufweist, kann die Schleifschnecke alternativ oder zusätzlich dazu ausgebildet sein, eine Bewegung mit einer Bewegungskomponente parallel zur Werkstückachse auszuführen, und das Erzeugen der gezielten relativen Zusatzbewegung kann umfassen:
Anregen einer translatorischen Schwingung der Schleifschnecke mit einer Schwingungskomponente parallel zur Werkstückachse.

Alternativ oder zusätzlich kann die Schleifschnecke entlang einer Shift-Richtung parallel zur Schneckenachse verschiebbar sein, und das Erzeugen der gezielten relativen Zusatzbewegung kann umfassen:
Anregen einer translatorischen Schwingung der Schleifschnecke mit einer Schwingungskomponente in Shift-Richtung parallel zur Schneckenachse.

Alternativ oder zusätzlich kann das Erzeugen der gezielten relativen Zusatzbewegung umfassen:
Anregen einer Torsionsschwingung der Schleifschnecke um die Schneckenachse.

Das vorverzahnte Werkstück kann auf einer Werkstückspindel angeordnet sein, und das Erzeugen der gezielten relativen Zusatzbewegung kann alternativ oder zusätzlich umfassen:
Anregen einer Torsionsschwingung der Werkstückspindel um die Werkstückachse, und/oder
Anregen einer Biegeschwingung der Werkstückspindel, insbesondere um eine Richtung senkrecht zur Werkstückachse, und/oder
Anregen einer Translationsschwingung der Werkstückspindel, insbesondere mit einer Schwinungskomponente entlang einer Richtung parallel und/oder senkrecht zur Werkstückachse.

Alternativ oder zusätzlich ist es ebenfalls denkbar, das gezielte Variieren der Durchdringungstiefe über eine entsprechend abgerichtete Schleifschnecke zu erreichen.

Die Schleifschnecke kann auf einer Schleifschneckengangflanke eines Schleifschneckengangs eine Gangwelligkeit aufweisen, wobei das gezielte Variieren der Durchdringungstiefe zur Erzeugung der Zahnflankenwelligkeit umfassen kann:
Übertragen der Gangwelligkeit der Schleifschneckengangflanke auf die mit der Schleifschnecke im Wälzeingriff stehende Zahnflanke des vorverzahnten Werkstücks.

Das Verfahren kann das Abrichten der Schleifschnecke zur Erzeugung der Gangwelligkeit umfassen.

Die Gangwelligkeit kann dabei auch entweder nur auf einem Teil oder auf mehreren verschiedenen Teile des Schleifschneckengangs, bzw. auf einem oder mehreren Breitenbereichen der Schleifschnecke erzeugt werden, welche dann während des Schleifens des Werkstücks gezielt durch Shiften in Shift-Richtung durchlaufen werden können. Beispielsweise kann jedem Schleifhub ein Bereich mit konstanter Gangwelligkeit zugeordnet sein, oder aber die Gangwelligkeit kann derart ausgebildet sein, dass sie sich während eines Schleifhubs verändert.

Die relative Bewegung zwischen der Schleifschnecke kann mit einer Shiftvorschubgeschwindigkeit entlang der Shift-Richtung und mit einer Axialvorschubgeschwindigkeit in einer Axial-Richtung parallel zur Werkstückachse erfolgen, wobei die Shiftvorschubgeschwindigkeit und die Axialvorschubgeschwindigkeit in einem derart vorgegebenen Diagonalverhältnis stehen, dass die Gangwelligkeit auf die Zahnflanke des vorverzahnten Werkstücks abgebildet wird und dadurch gezielt die Oberflächenstruktur der Zahnflanke modifiziert wird.

Das Diagonalverhältnis bezeichnet dabei das Verhältnis der Shiftvorschubgeschwindigkeit der Schleifschnecke in der Shift-Richtung zur Axialvorschubgeschwindigkeit der Schleifschnecke in der Axial-Richtung parallel zur Werkstückachse. Das Diagonalverhältnis kann Null oder ungleich Null sein.

Eine Gangwelligkeit fest in den Schleifschneckengang zu profilieren bietet den Vorteil, dass die Gangwelligkeit unabhängig von einer Bearbeitung des vorverzahnten Werkstücks in einem zeitlich getrennten und weniger dynamischen Prozess erzeugt werden kann und somit, im Gegensatz zur Erzeugung maschinengesteuerter Zusatzbewegung, weniger hohe Präzisionsanforderungen an die im hochdynamischen Schleifprozess beteiligten Maschinenachsen gestellt werden.

Das Verfahren kann zudem weiter umfassen:
Abrichten der Schleifschnecke mit einem Abrichtwerkzeug, wobei das Abrichtwerkzeug eine Rundlaufabweichung und/oder eine Planlaufabweichung aufweisen kann. In diesem Fall kann ein festes oder variables Drehwinkelverhältnis zwischen dem Abrichtwerkzeug und der Schleifschnecke vorgegeben werden, derart, dass die Rundlaufabweichung und/oder die Planlaufabweichung gezielt zur Erzeugung der Gangwelligkeit auf der Schleifschneckengangflanke genutzt wird.

In einer Variante weist die Schleifschnecke mindestens zwei Schleifschneckengänge auf, wobei auf jedem der mindestens zwei Schleifschneckengänge jeweils eine Gangwelligkeit entlang eines Schneckenkontaktpfads erzeugt wird, und wobei die mindestens zwei Schleifschneckengänge jeweils auf der Zahnflanke benachbarte Kontaktspuren erzeugen, wobei jede Kontaktspur auf der Zahnflanke mit einem der mindestens zwei Schneckenkontaktpfade assoziiert ist, und wobei sich die auf den betreffenden Schleifschneckengängen erzeugten Gangwelligkeiten vorzugsweise unterscheiden.

Damit die mindestens zwei Schleifschneckengänge jeweils auf der Zahnflanke benachbarte Kontaktspuren erzeugen, ist zu berücksichtigen, in welcher Eingriffsfolge die mindestens zwei Schleifschneckengänge mit der Zahnflanke in den Wälzeingriff kommen und ein passendes Zähne-Gänge-Verhältnis zwischen dem vorverzahnten Werkstück und der Schleifschnecke zu wählen.

Die Schneckenkontaktpfade weisen bevorzugt jeweils einen Schneckenkontaktpfad-Startpunkt auf, welcher mit einem Kontaktspur-Startpunkt der jeweiligen Kontaktspur auf der Zahnflanke assoziiert ist, wobei die Gangwelligkeiten der mindestens zwei Schleifschneckengänge am jeweiligen Schneckenkontaktpfad-Startpunkt zueinander phasenverschoben sind.

Die Gangwelligkeiten der mindestens zwei Schleifschneckengänge können zudem einen Wellenlängenunterschied aufweisen. Diese Unterschiede zwischen den Schleifschneckengängen können, unter Berücksichtigung Eingriffsfolge und mit einer geeigneten Wahl des Shift-Vorschubs, gezielt auf die Zahnflanke abgebildet werden, um den Phasenversatz zwischen den Zahnflankenwelligkeiten benachbarter Kontaktspuren gezielt einzustellen.

Alternativ oder zusätzlich können die Gangwelligkeiten der mindestens zwei Schleifschneckengänge auch einen Welligkeitsamplitudenunterschied aufweisen. Die Schneckenkontaktpfad-Startpunkte können im Allgemeinen an unterschiedlichen Umfangpositionen bezogen auf eine Umfangrichtung der Schleifschnecke angeordnet sein.

Im Fall einer Schleifschnecke, welche mindestens zwei Schleifschneckengänge aufweist, kann das Verfahren weiter umfassen:
Abrichten einer der Schleifschneckengänge der Schleifschnecke mit einem konstanten Gangteilungsfehler zur Erzeugung eines vorstehenden Schleifschneckengangs, wobei der Gangteilungsfehler derart gewählt ist, dass der vorstehende Schleifschneckengang eine grössere Durchdringungstiefe erzielt als seine bezüglich einer Eingriffsfolge an der Zahnflanke vorangehenden und nachfolgenden Schleifschneckengänge, derart, dass der vorstehende Schleifschneckengang die durch seine vorangehenden Schleifschneckengänge entstandenen Kontaktspuren mindestens teilweise überschleift.

Wird der Gangteilungsfehler in einer geeigneten Grössenordnung gewählt, können alle Kontaktspuren zwischen zwei Kontaktspuren des vorstehenden Schleifschneckengangs überschliffen werden. Dies kann dazu führen, dass im Ergebnis auf der Werkstückzahnflanke nur noch (verhältnismässig breite) Kontaktspuren entstehen, die durch den vorstehenden Schleifschneckengang erzeugt wurden, und dass die Zahnflankenwelligkeit nur durch den vorstehenden Schleifschneckengang erzeugt wird. In diesem Fall kann der Shift-Vorschub um einen Faktor, welcher der Anzahl der in einer Zahnlücke in Eingriff kommenden Schleifschneckengänge entspricht, reduziert werden.

In einigen Ausführungsformen wird nur auf diesem vorstehenden Schleifschneckengang eine Gangwelligkeit erzeugt. In anderen Ausführungsformen wird jeweils auf jedem der mindestens zwei Schleifschneckengänge eine Gangwelligkeit erzeugt.

Bevorzugt ist das gezielte Variieren der Durchdringungstiefe mit nicht-kontrollierten, insbesondere stochastisch auftretenden, Abweichungen der Durchdringungstiefe überlagert, wobei das gezielte Variieren der Durchdringungstiefe mit einer Modulationsamplitude erfolgt, welche in einem Bereich zwischen dem 0.2-Fachen und 5-Fachen eines Schwankungsmasses für die nicht-kontrollierten Abweichungen der Durchdringungstiefe liegt,
wobei das Schwankungsmass insbesondere einer Standardabweichung oder einem Interquartilsabstand der nicht-kontrollierten Abweichungen der Durchdringungstiefe entspricht,
insbesondere, wobei das Schwankungsmass der nicht-kontrollierten Abweichungen der Durchdringungstiefe ermittelt wird und die Modulationsamplitude gezielt in Abhängigkeit von dem ermittelten Schwankungsmass gewählt wird.

Durch die gezielten Variationen der Durchdringungstiefe kann somit ein geeignetes Trägermuster auf der Zahnflanke erzeugt werden, welches durch die Überlagerung mit den nicht-kontrollierten Abweichungen diffuser gemacht werden kann, was zu einer Optimierung des Geräuschverhaltens führt.

In einem weiteren Aspekt stellt die vorliegende Erfindung eine Werkzeugmaschine zur Verfügung, aufweisend:
eine Werkzeugspindel, die dazu ausgebildet ist, eine Schleifschnecke zu einer Drehung um eine Schneckenachse aufzunehmen;
eine Werkstückspindel, die dazu ausgebildet ist, ein vorverzahntes Werkstück zu einer Drehung um eine Werkstückachse aufzunehmen;
einen Axialschlitten mit einem Axialantrieb zur Erzeugung einer relativen Bewegung zwischen der Werkzeugspindel und der Werkstückspindel, wobei die relative Bewegung eine Axialkomponente parallel zur Werkstückachse aufweist, und
eine Steuerung, die dazu ausgebildet ist, das voranstehend dargestellte Verfahren auszuführen.

Die Werkzeugmaschine umfasst bevorzugt einen Shift-Schlitten mit einem Shift-Antrieb zur Erzeugung einer Verschiebung der Schleifschnecke in einer Shift-Richtung parallel zur Schneckenachse, wobei der Shift-Antrieb dazu ausgebildet ist, den Shift-Schlitten zu einer translatorischen Schwingung in Shift-Richtung anzuregen.

Alterativ oder zusätzlich kann der Axialantrieb dazu ausgebildet sein, den Axialschlitten zu einer translatorischen Schwingung mit einer Schwingungskomponente parallel zur Werkstückachse anzuregen.

Alternativ oder zusätzlich kann die Werkzeugspindel dazu ausgebildet ist, die Schleifschnecke zu einer Torsionsschwingung um die Schneckenachse anzuregen.

Alternativ oder zusätzlich kann die Werkzeugmaschine einen Werkzeugträger mit einem Werkzeugträgerantrieb zur Erzeugung einer Zustellbewegung der Schleifschnecke in einer Zustellrichtung radial zur Schneckenachse aufweisen, wobei der Werkzeugträgerantrieb dazu ausgebildet ist, die Schleifschnecke zu einer translatorischen Schwingung in Zustellrichtung anzuregen.

Alternativ oder zusätzlich kann die Werkzeugmaschine mindestens ein separates Werkzeugschwingungsmodul aufweisen,
welches dazu ausgebildet ist, den Shift-Schlitten und/oder die Werkzeugspindel zu einer translatorischen Schwingung in Shift-Richtung anzuregen, und/oder
welches dazu ausgebildet ist, den Axialschlitten zu einer translatorischen Schwingung mit einer Schwingungskomponente parallel zur Werkstückachse anzuregen, und/oder
welches dazu ausgebildet ist, den Werkzeugträger zu einer translatorischen Schwingung in Zustellrichtung anzuregen, und/oder
welches dazu ausgebildet ist, die Werkzeugspindel zu einer Torsionsschwingung um die Schneckenachse anzuregen.

Die Werkzeugmaschine kann für eine beliebige Auswahl der obengenannten Anregungsformen oder für aber für jede der obengenannten Anregungsformen jeweils ein separates Werkzeugschwingungsmodul aufweisen.

Es ist insbesondere denkbar, den Shift-Schlitten und die Werkzeugspindel mit unterschiedlichen Anregungsparametern anzuregen und somit eine überlagerte translatorische Schwingung zu erzeugen.

Die Werkzeugmaschine kann alternativ oder zusätzlich einen Werkstückspindelantrieb zum Antreiben der Werkstückspindel umfassen, wobei der Werkstückspindelantrieb dazu ausgebildet ist, die Werkstückspindel zu einer Torsionsschwingung und/oder einer Biegeschwingung und/oder einer Translationsschwingung anzuregen.

Alternativ oder zusätzlich kann die Werkzeugmaschine mindestens ein separates Werkstückschwingungsmodul aufweisen, welches dazu ausgebildet ist, die Werkstückspindel zu einer Torsionsschwingung und/oder einer Biegeschwingung und/oder einer Translationsschwingung anzuregen.

Die Werkzeugmaschine kann für eine beliebige Auswahl der obengenannten Anregungsformen der Werkstückspindel oder für aber für jede der obengenannten Anregungsformen der Werkstückspindel jeweils ein separates Werkstückschwingungsmodul aufweist.

Der Term "Schwingung" bezeichnet im vorliegenden Kontext sich zeitlich wiederholende (periodische) Schwankungen. Die Schwingungen können harmonisch sein oder andere Schwingungsformen aufweisen. Die oben genannten Schwingungen können jeweils eine Schwingungsfrequenz aufweisen, welche zeitlich konstant ist oder welche gezielt zeitlich variiert wird. Ebenso können die oben genannten Schwingungen jeweils eine Schwingungsamplitude aufweisen, welche zeitlich konstant ist oder welche gezielt zeitlich variiert wird.

Die einzelnen Anregungsquellen sowie die Verwendung einer Schleifschnecke mit einer Gangwelligkeit können beliebig miteinander kombiniert werden. Es ist auch denkbar, durch Überlagerung verschiedener Anregungsquellen gezielt Schwebungen zu erzeugen.

Ebenfalls denkbar ist es, das gezielte Variieren der Durchdringungstiefe während verschiedener Schleifhübe in einem Schleifprozesses anhand verschiedener Methoden zu erzielen, z.B. einen Schrupphub mit Anregung einer Schwingung in Shift-Richtung und einen Schlichthub mit Gangwelligkeit auf der Schleifschnecke durchzuführen. Ebenso können während eines Schleifhubes verschiedene Methoden zum gezielten Variieren der Durchdringungstiefe angewendet werden, beispielsweise bevorzugt während des Schlichthubs, da dieser für die finale Oberfläche verantwortlich ist. Hierbei können einzelne, mehrere oder alle zur Verfügung stehenden Anregungsquellen während des Schleifhubs zu- und abgeschaltet bzw. in Amplitude und Frequenz variiert werden, um die Anregungscharakteristik während des Schleifhubs, d.h. über der Flankenbreite zu variieren. Dadurch kann eine diffusere Oberflächenstruktur mit weniger periodischen Anteilen erzeugt werden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Ansicht einer Wälzschleifmaschine;
- Fig. 2: ein vergrösserter Ausschnitt aus Fig. 1;
- Fig. 3: eine schematische Schnittansicht entlang einer Flankenlinie einer Zahnflanke;
- Fig. 4: eine schematische Darstellung einer Mehrzahl in Breitenrichtung zueinander beabstandeter Kontaktspuren auf einer Zahnflanke;
- Fig. 5A: eine schematische Darstellung der effektiven Kontaktspurbreiten einer Mehrzahl in Breitenrichtung zueinander beabstandeter Kontaktspuren auf einer Zahnflanke ohne Phasenversatz zwischen den Kontaktspuren;
- Fig. 5B: eine schematisch aus der periodischen Variation einer Durchdringungstiefe zwischen Schleifschnecke und Werkstück resultierende Zahnflankenwelligkeit ohne Phasenversatz zwischen den Kontaktspuren;
- Fig. 5C: einen vergrösserten Ausschnitt aus einem Längsschnitt entlang der in den Fig. 5A und Fig. 5B gezeigten Schnittlinie A'-A';
- Fig. 5D: einen vergrösserten Ausschnitt aus einem Längsschnitt entlang der in den Fig. 5A und Fig. 5B gezeigten Schnittlinie B'-B';
- Fig. 6A: eine schematische Darstellung der effektiven Kontaktspurbreite einer Mehrzahl in Breitenrichtung zueinander beabstandeter Kontaktspuren auf einer Zahnflanke mit einem Phasenversatz von 180° zwischen den Kontaktspuren;
- Fig. 6B: eine schematisch aus der periodischen Variation der Durchdringungstiefe resultierende Zahnflankenwelligkeit mit einem Phasenversatz von 180° zwischen den Kontaktspuren;
- Fig. 6C: einen vergrösserten Ausschnitt aus einem Längsschnitt entlang der in den Fig. 6A und Fig. 6B gezeigten Schnittlinie A"-A";
- Fig. 6D: einen vergrösserten Ausschnitt aus einem Längsschnitt entlang der in den Fig. 6A und Fig. 6B gezeigten Schnittlinie B"-B";
- Fig. 7A: eine schematische stirnseitige Ansicht einer Schleifschneckengangflanke eines einzelnen Schleifschneckengangs einer Schleifschnecke für eine Ganghöhe der Schleifschnecke;
- Fig. 7B: eine Abwicklung einer kreisringförmige Schleifschneckenoberfläche mit einer schematisch dargestellten Gangwelligkeit;
- Fig. 8: eine Schnittansicht einer Zahnflanke in Breitenrichtung;
- Fig. 9A: eine gezielte periodische Variation der Durchdringungstiefe in Abhängigkeit einer Position entlang einer Kontaktspur;
- Fig. 9B: nicht-kontrollierte, stochastisch auftretende Abweichungen der Durchdringungstiefe in Abhängigkeit der Position entlang einer Kontaktspur;
- Fig. 9C: eine resultierende Überlagerung der gezielten Variation aus Fig. 9A und der nicht-kontrollierten Abweichungen aus Fig. 9B, und
- Fig. 10: eine beispielhafte Abbildung einer anhand eines erfindungsgemässen Verfahren modifizierten Oberflächenstruktur einer Zahnflanke.

### BESCHREIBUNG BEVORZUGTER AUSFÜHRUNGSFORMEN

### Beispielhafter Aufbau einer Wälzschleifmaschine

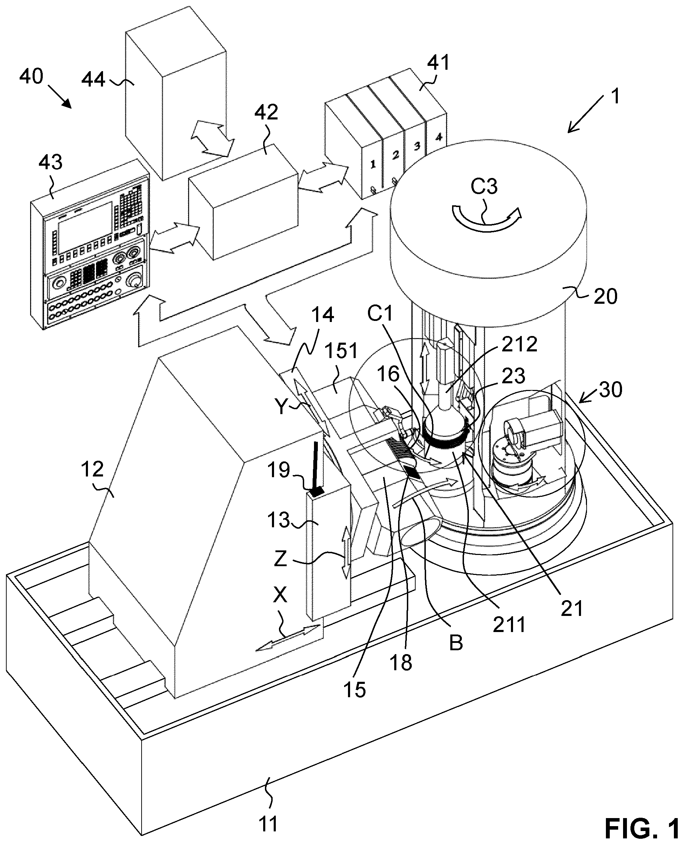

In der Fig. 1 ist als Beispiel für eine Werkzeugmaschine beispielhaft eine Wälzschleifmaschine 1 dargestellt, die im Folgenden auch verkürzt als "Maschine" bezeichnet wird. Die Maschine 1 weist ein Maschinenbett 11 auf, auf dem ein Werkzeugträger 12 entlang einer radialen Zustellrichtung X verschiebbar geführt ist. Der Werkzeugträger 12 trägt einen Axialschlitten 13, der entlang einer Vorschubrichtung Z gegenüber dem Werkzeugträger 12 verschiebbar geführt ist. Auf dem Axialschlitten 13 ist ein Schleifkopf montiert, der zur Anpassung an den Schrägungswinkel der zu bearbeitenden Verzahnung um eine parallel zur X-Richtung verlaufende Schwenkachse (die sogenannte A-Achse) verschwenkbar ist. Der Schleifkopf wiederum trägt einen Shift-Schlitten 14, auf dem eine Werkzeugspindel 15 entlang einer Shift-Richtung Y gegenüber dem Schleifkopf verschiebbar ist. Auf der Werkzeugspindel 15 ist eine schneckenförmig profilierte Schleifscheibe (Schleifschnecke) 16 aufgespannt. Die Schleifschnecke 16 wird von der Werkzeugspindel 15 zu einer Drehung um eine Schneckenachse B angetrieben.

Das Maschinenbett 11 trägt des Weiteren einen schwenkbaren Werkstückträger 20 in Form eines Drehturms, der um eine Schwenkachse C3 zwischen mindestens drei Stellungen verschwenkbar ist. Auf dem Werkstückträger 20 sind einander diametral gegenüberliegend zwei identische Werkstückspindeln montiert, von denen in der Fig. 1 nur eine Werkstückspindel 21 sichtbar ist. Auf jeder der Werkstückspindeln ist jeweils ein Werkstück aufspannbar und zu einer Rotation um eine Werkstückachse C1 antreibbar. In der in Fig. 1 gezeigten Maschine verläuft die Vorschubrichtung Z parallel zur Werkstückachse C1. Die Vorschubrichtung Z, entlang welcher der Axialschlitten 13 verschiebbar geführt ist, kann allerdings auch zur Werkstückachse C1 geneigt sein. Die in der Fig. 1 sichtbare Werkstückspindel 21 befindet sich in einer Bearbeitungsposition, in der ein auf ihr aufgespanntes Werkstück 23 mit der Schleifschnecke 16 bearbeitet werden kann. Die andere, um 180° versetzt angeordnete und in der Fig.1 nicht sichtbare Werkstückspindel befindet sich in einer Werkstückwechselposition, in der ein fertig bearbeitetes Werkstück von dieser Spindel entnommen und ein neues Rohteil aufgespannt werden kann. Um 90° zu den Werkstückspindeln versetzt ist eine Abrichteinrichtung 30 montiert.

Die Maschine 1 weist somit eine Vielzahl beweglicher Komponenten wie Schlitten oder Spindeln auf, die durch entsprechende Antriebe gesteuert bewegbar sind. Diese Antriebe werden in der Fachwelt häufig als "NC-Achsen", "Maschinenachsen" oder verkürzt als "Achsen" bezeichnet. Teilweise schliesst diese Bezeichnung auch die von den Antrieben angetriebenen Komponenten wie Schlitten oder Spindeln ein.

Die Maschine 1 weist des Weiteren eine Vielzahl von Sensoren auf. Beispielhaft sind in der Fig. 1 nur zwei Sensoren 18 und 19 schematisch angedeutet. Beim Sensor 18 handelt es sich um einen Schwingungssensor zur Erfassung von Schwingungen des Gehäuses der Schleifspindel 15. Der Sensor 19 ist ein Positionssensor zur Erfassung der Position des Axialschlittens 13 relativ zum Werkzeugträger 12 entlang der Z-Richtung. Darüber hinaus umfasst die Maschine 1 aber noch eine Vielzahl weiterer Sensoren. Unter diesen Sensoren befinden sich insbesondere weitere Positionssensoren zur Erfassung einer Ist-Position von jeweils einer Linearachse, Drehwinkelsensoren zur Erfassung einer Drehposition von jeweils einer Drehachse, Stromaufnehmer zur Erfassung eines Antriebsstroms von jeweils einer Achse und weitere Schwingungssensoren zur Erfassung von Schwingungen von jeweils einer angetriebenen Komponente.

Alle angetriebenen Achsen der Maschine 1 werden durch eine Maschinensteuerung 40 digital gesteuert. Die Maschinensteuerung 40 umfasst mehrere Achsmodule 41, einen Steuerrechner 42 und eine Bedientafel 43. Der Steuerrechner 42 empfängt Bedienerbefehle von der Bedientafel 43 sowie Sensorsignale von verschiedenen Sensoren der Maschine 1 und errechnet daraus Steuerbefehle für die Achsmodule 41. Er gibt des Weiteren Betriebsparameter an die Bedientafel 43 zur Anzeige aus. Die Achsmodule 41 stellen an ihren Ausgängen Steuersignale für jeweils eine Maschinenachse bereit.

Mit dem Steuerrechner 42 ist eine Überwachungseinrichtung 44 verbunden, die im Betrieb der Maschine 1 diverse Überwachungsaufgaben wahrnimmt.

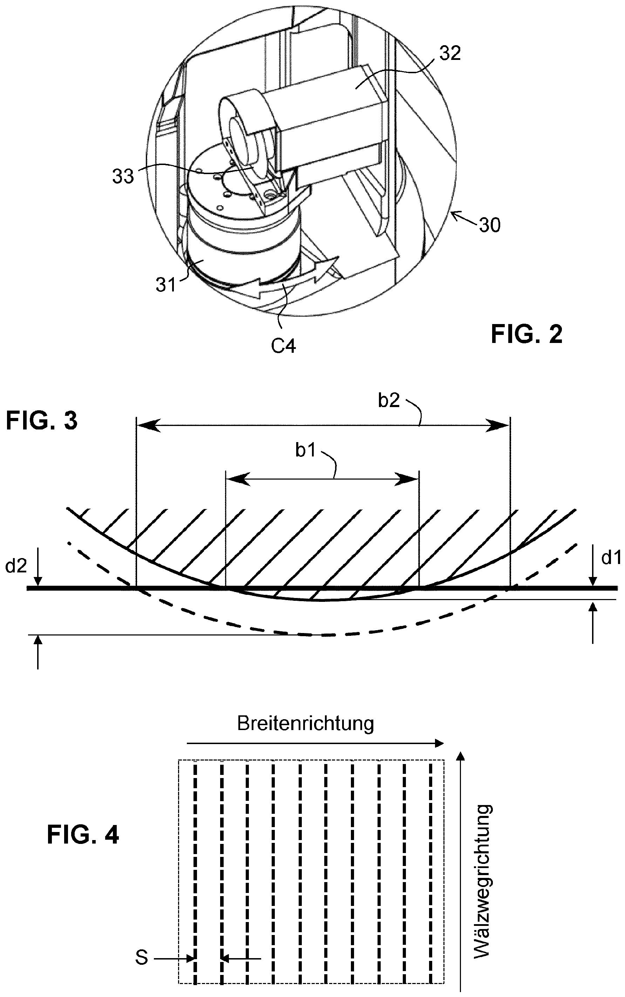

In der Fig. 2 ist ein Ausschnitt aus der Fig. 1 vergrössert dargestellt. Man erkennt hier besonders gut die Abrichteinrichtung 30. Auf einem Schwenkantrieb 31 ist, um eine Achse C4 schwenkbar, eine Abrichtspindel 32 angeordnet, auf der ein scheibenförmiges Abrichtwerkzeug 33 aufgespannt ist. Stattdessen oder zusätzlich kann auch ein feststehendes Abrichtwerkzeug vorgesehen sein, insbesondere ein sogenannter Kopfabrichter, der dazu vorgesehen ist, lediglich mit den Kopfbereichen der Schleifschneckengänge der Schleifschnecke in Eingriff zu kommen, um diese Kopfbereiche abzurichten.

### Kontaktspuren mit variierender Durchdringungstiefe

In einem Schraubwälzgetriebe, wie es bei einer Paarung aus einem aussenverzahnten Stirnrad (dem vorverzahnten Werkstück) und der Schleifschnecke der Fall ist, liegt bei nichtparallelen Achsen des vorverzahnten Werkstücks und der Schleifschnecke eine Punktberührung in vor. Beim Durchwälzen der Paarung wandert der Berührpunkt entlang eines geometrisch durch die Paarung bestimmten Pfads jeweils über die Zahnflanke des vorverzahnten Werkstücks und über die Schleifschneckengangflanke der Schleifschnecke. Im vorliegenden Kontext wird der Pfad auf der Zahnflanke als Kontaktspur bezeichnet, der Pfad auf der Schleifschneckenflanke als Schneckenkontaktpfad. Bei jeder Umdrehung wird auf der Zahnflanke eine neue Kontaktspur erzeugt und entsprechend Material abgetragen.

Fig. 3 zeigt eine schematische Schnittansicht entlang einer Flankenlinie der Zahnflanke. Wie in Fig. 3 dargestellt, weist die einzelne Kontaktspur jeweils eine Einzelkontaktspurbreite b1, b2 auf, welche von einer Durchdringungstiefe d1, d2 zwischen der Schleifschnecke 16, in Fig. 3 schematisch durch einen Kreisbogen dargestellt, und dem vorverzahnten Werkstück 23 abhängt. Eine erste Einzelkontaktspurbreite b1 entspricht in Fig. 3 einer ersten Durchdringungstiefe d1, während eine zweite Einzelkontaktspurbreite b2 einer zweiten Durchdringungstiefe d2 entspricht. Aus Fig. 3 ist gut zu erkennen, dass für eine einzelne Kontaktspur eine Erhöhung der Durchdringungstiefe zu einer Verbreiterung der Kontaktspur führt. In Fig. 3 ist das Verhältnis zwischen der Einzelkontaktspurbreite und der Durchdringungstiefe der Schleifschnecke allerdings zu Illustrationszwecken nicht massstabgetreu dargestellt. In für den Wälzschleifprozess üblichen realistischen Grössenordnungen der Durchdringungstiefe kann eine monotone Beziehung zwischen der Durchdringungstiefe und der Einzelkontaktspurbreite angenommen werden.

In der Fig. 4 sind schematisch jeweils eine Mehrzahl benachbarter Kontaktspuren als gestrichelte Linien dargestellt. Durch Erzeugen einer relativen Bewegung zwischen der Schleifschnecke und dem vorverzahnten Werkstück entsteht bei jeder Umdrehung des Werkstücks eine neue Kontaktspur, die in Werkstück-Breitenrichtung um einen Kontaktspurabstand S von der vorangehend erzeugten Kontaktspur beabstandet ist. Der Kontaktspurabstand S wird dabei durch die Axialkomponente der relativen Bewegung parallel zur Werkstückachse C1 bestimmt. Die relative Bewegung kann, muss aber nicht zwangsläufig zeitlich konstant sein. Weist das vorverzahnte Werkstück eine Geradverzahnung auf und findet während der Erzeugung der jeweiligen Kontaktspur keine relative Bewegung parallel zur Werkstückachse C1 statt, so verlaufen die Kontaktspuren in Wälzwegrichtung und somit senkrecht zu den Flankenlinien, wie das in der Fig. 4 dargestellt ist. Findet eine relative Bewegung parallel zur Werkstückachse C1 während der Erzeugung der jeweiligen Kontaktspuren statt und/oder weist das vorverzahnte Werkstück eine Schrägverzahnung auf, so verlaufen im Allgemeinen die Kontaktspuren geneigt zur Wälzwegrichtung und somit geneigt zu den Flankenlinien. Ist die relative Bewegung parallel zur Werkstückachse C1 konstant, so verlaufen die Kontaktspuren parallel zueinander in konstantem Abstand.

Wird die Durchdringungstiefe entlang der Kontaktspuren nicht variiert, so weisen alle Kontaktspuren dieselbe Kontaktspurbreite auf. Wird hingegen entlang der Kontaktspuren die Durchdringungstiefe variiert, so entsteht entlang der jeweiligen Kontaktspur eine Zahnflankenwelligkeit und es ergibt sich eine effektive Kontaktspurbreite b_{eff}, wobei zwei Fälle unterschieden werden können:

### Fall 1 - Kein Phasenversatz zwischen Zahnflankenwelligkeiten benachbarter Kontaktspuren

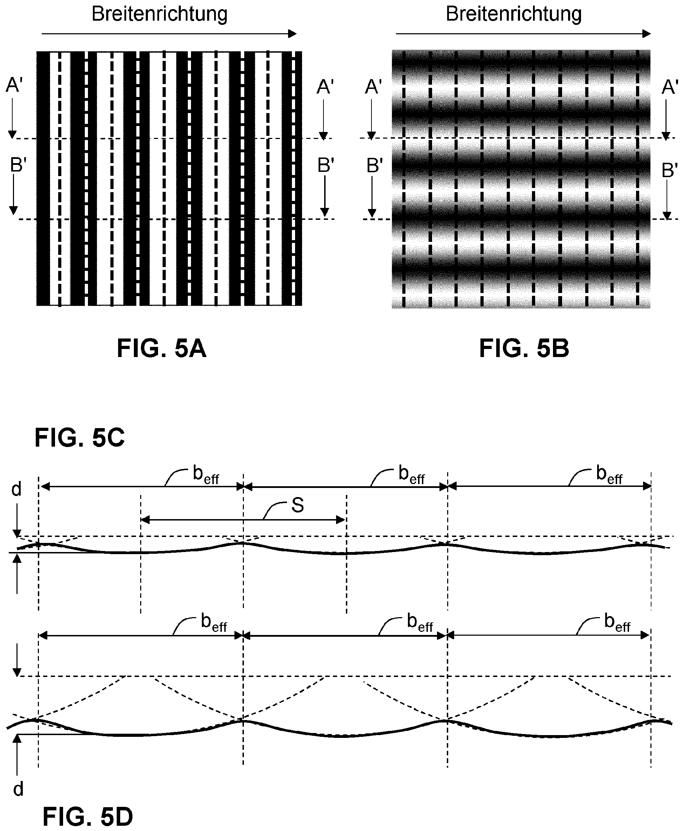

Die Figuren 5A-5D illustrieren einen Fall, in welchem die Durchdringungstiefe d entlang der jeweiligen Kontaktspuren periodisch variiert und somit eine Zahnflankenwelligkeit erzeugt wird, wobei allerdings kein Phasenversatz zwischen den Zahnflankenwelligkeiten benachbarter Kontaktspuren auftritt. Fig. 5A illustriert mittels alternierender schwarzer und weisser Streifen die effektive Kontaktspurbreite b_{eff} der jeweiligen gestrichelt dargestellten Kontaktspuren. Fig. 5B zeigt schematisch die aus der periodischen Variation der Durchdringungstiefe d resultierende Oberflächenstruktur mit hell schattiert dargestellten Wellenbergen und dunkel schattiert dargestellten Wellentälern. Fig. 5C zeigt einen vergrösserten Ausschnitt aus einem Längsschnitt entlang der in den Fig. 5A und Fig. 5B gezeigte Schnittlinie A'-A' (Wellenberg). Fig. 5D zeigt einen vergrösserten Ausschnitt aus einem Längsschnitt entlang der in den Fig. 5A und Fig. 5B gezeigte Schnittlinie B'-B' (Wellental). Sowohl in Fig. 5C als auch in Fig. 5D ist die bearbeitete Zahnflankenoberfläche als durchgezogene Linie dargestellt. Obwohl die Durchdringungstiefe d in dem in Fig. 5D gezeigten Längsschnitt entlang des Wellentals grösser ist als in dem in Fig. 5C gezeigten Längsschnitt entlang des Wellenbergs, bleibt die effektive Kontaktspurbreite b_{eff} entlang der Kontaktspuren jeweils konstant. Dies ist der Fall, da eine vorangehende Kontaktspur bei der Erzeugung der nachfolgenden benachbarten Kontaktspur teilweise überschliffen wird aufgrund der Tatsache, dass in diesem Beispiel der Kontaktspurabstand S zwischen benachbarten Kontaktspuren kleiner ist als die eigentliche Kontaktspurbreite, welche eine Kontaktspur hätte, wenn sie ohne Überschneidung mit benachbarten Kontaktspuren erzeugt würde (wie Fig. 3 gezeigt), und da die Variation der Durchdringungstiefe d "gleichphasig", d.h. ohne Phasenversatz zwischen den Zahnflankenwelligkeiten benachbarter Kontaktspuren erfolgt. Als Konsequenz bilden die Wellentäler und Wellenberge der benachbarten Kontaktspuren durchgehende Wellenfronten, d.h. Linien gleicher Welligkeitsphasenlage, die in Breitenrichtung nicht unterbrochen sind, wobei entlang der Wellenfront lediglich kleine Amplitudenmodulationen auftreten (in Fig. 5C und Fig. 5D im Längsschnitt sichtbar, in Fig. 5B nicht dargestellt), welche von der Krümmung der Schleifschnecke im Kontaktpunkt abhängen und hier nicht massstabgetreu dargestellt sind. Derartige durchgehend verlaufende Wellenfronten auf der Oberfläche der Zahnflanke wirken sich häufig nachteilig auf das Geräuschverhalten des Zahnrads in einem Getriebe aus.

### Fall 2 - Phasenversatz zwischen Zahnflankenwelligkeiten benachbarter Kontaktspuren vorhanden

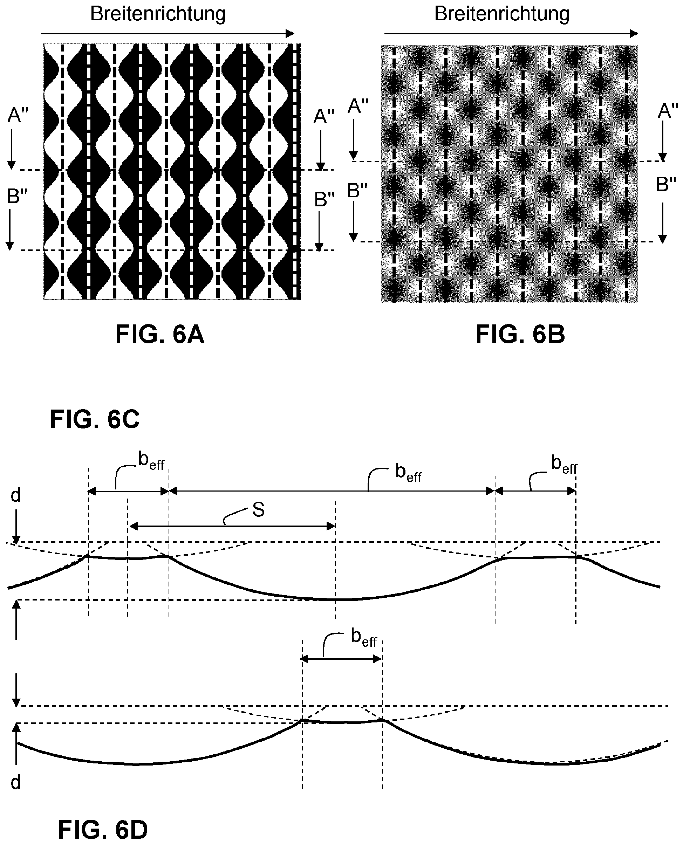

Die Figuren 6A-6D illustrieren schematisch ein Ausführungsbeispiel, in welchem die Durchdringungstiefe d entlang der jeweiligen Kontaktspuren periodisch variiert und somit eine Zahnflankenwelligkeit erzeugt wird, wobei der Phasenversatz zwischen den Zahnflankenwelligkeiten benachbarter Kontaktspuren jeweils 180° beträgt. Fig. 6A illustriert schematisch mittels alternierender schwarzer und weisser Streifen die effektive Kontaktspurbreite b_{eff} der jeweiligen gestrichelt dargestellten Kontaktspuren. Fig. 6B zeigt schematisch aus der periodischen Variation der Durchdringungstiefe d resultierende Oberflächenstruktur mit hell schattiert dargestellten Wellenbergen und dunkel schattiert dargestellten Wellentälern. Fig. 6C zeigt einen vergrösserten Ausschnitt aus einem Längsschnitt entlang der in den Fig. 6A und Fig. 5B gezeigte Schnittlinie A"-A". Fig. 6D zeigt einen vergrösserten Ausschnitt aus einem Längsschnitt entlang der in den Fig. 6A und Fig. 6B gezeigte Schnittlinie B"-B". Sowohl in Fig. 6C als auch in Fig. 6D ist die bearbeitete Zahnflankenoberfläche als durchgezogene Linie dargestellt. Im Gegensatz zu der in den Fig. 5A-5D gezeigten Situation bilden die Wellentäler und Wellenberge der benachbarten Kontaktspuren hier in Breitenrichtung keine durchgehend verlaufende Wellenfronten. Durch den Phasenversatz von 180° resultiert stattdessen, wie in Fig. 6B gezeigt, eine schachbrettartige Oberflächenstruktur.

### Gezieltes Variieren der Durchdringungstiefe

Bei einem stationären Wälzschleifprozess, d.h. einem Wälzschleifprozess mit konstanten Prozessparametern, vergeht zwischen der Erzeugung benachbarter Kontaktspuren auf derselben Zahnflanke eine bestimmte konstante Zeitspanne *t_{K}*. Die Kontaktspuren werden also mit einer Erzeugungsfrequenz ${f}_{K} = \frac{1}{{t}_{K}}$ erzeugt. Detaillierter ausgedrückt beschreibt diese Erzeugungsfrequenz *f_{K}* die Frequenz, mit welcher die Berührpunkte zwischen der Schleifschnecke und dem vorverzahnten Werkstück im Wälzschleifprozess eine beliebig gewählte Flankenlinie durchkreuzen. Im Falle einer Geradverzahnung ohne Shift-Vorschub entspricht die Erzeugungsfrequenz *f_{K}* der Drehfrequenz *f*_{*C*₁} des Werkstücks. Allgemein kann die Erzeugungsfrequenz *f_{K}* allerdings von einer Shift-Vorschubgeschwindigkeit in Shift-Richtung und/oder bei Schrägverzahnungen vom Schrägungswinkel abhängen.

Um die Durchdringungstiefe gezielt zu variieren, wird nun eine periodische Schwingung mit einer Variationsfrequenz *f_{V}* dem stationären Wälzschleifprozess überlagert, welche zu einer periodischen relativen Bewegung zwischen der Schleifschnecke und dem vorverzahnten Werkstück in einer Richtung normal zur Oberfläche von Schleifschnecke und Werkstück im Berührpunkt führt. Die Schwingung kann dabei auf verschiedene Arten erzeugt werden. Das Verhältnis der Variationsfrequenz *f_{V}* zur Erzeugungsfrequenz *f_{K}* kann als Ordnung P der Frequenz *f_{V}* bezüglich der Frequenz *f_{K}* definiert werden: $P = \frac{{f}_{V}}{{f}_{K}}$

Ist diese Ordnung P ganzzahlig, ergibt sich zwischen den benachbarten Kontaktspuren entlang einer beliebigen Flankenlinie der Zahnflanke betrachtet einen Phasenversatz von Δ*φ* = 0 (voranstehend erläuterter Fall 1).

Sobald für die Ordnung P ein nichtganzzahliger Wert gewählt wird, ergibt sich zwischen entlang einer beliebigen Flankenlinie der Zahnflanke betrachtet den benachbarten Kontaktspuren ein Phasenversatz Δ*φ* ≠ 0 (voranstehend erläuterter Fall 2).

Der Phasenversatz Δ*φ* kann wie folgt bestimmt werden: $Δ φ = \left(P-floor\left(P\right)\right) ⋅ 2 π$ wobei $floor \left(x\right) : = max \left\{k∈ℤ\left|k\leq x\right.\right\}$ die Abrundungsfunktion darstellt und floor(P) somit einem ganzzahligen Ordnungsanteil entspricht. Der nichtganzzahlige Ordnungsanteil, d.h. (*P* - floor(P)), bestimmt also die Phasenlage der Kontaktspuren relativ zueinander.

Somit lässt sich für einen gewünschten Phasenversatz Δ*φ* und einen gewünschten ganzzahligen Ordnungsanteil floor(P) eine mögliche Variationsfrequenz *f_{V}* bestimmen, da die Erzeugungsfrequenz *f_{K}* aus den kinematischen Verhältnissen des Wälzschleifprozesses bekannt ist: ${f}_{V} = {f}_{K} P = {f}_{K} \left(\frac{Δ φ}{2 π}+floor\left(P\right)\right)$

### Gezieltes Variieren der Durchdringungstiefe durch Zusatzbewegungen bei der Werkstückbearbeitung

Die Durchdringungstiefe kann auf verschiedene Weise gezielt variiert werden.

In einer Ausführungsform des Verfahrens wird die Durchdringungstiefe durch Erzeugen einer gezielten relativen Zusatzbewegung zwischen dem vorverzahnten Werkstück und der Schleifschnecke variiert. Die in Fig. 1 dargestellte Werkzeugmaschine 1 umfasst einen Shift-Schlitten 14 mit einem Shift-Antrieb zur Erzeugung einer Verschiebung der Schleifschnecke in der Shift-Richtung Y parallel zur Schneckenachse B, wobei der Shift-Antrieb dazu ausgebildet sein kann, zur Erzeugung der gezielten relativen Zusatzbewegung den Shift-Schlitten 14 zu einer translatorischen Schwingung in Shift-Richtung Y anzuregen.

Insbesondere bei Schrägverzahnungen kann die Durchdringungstiefe dadurch variiert werden, dass zusätzlich oder alternativ auch der Axialschlitten 13 von einem dazu ausgebildeten Axialantrieb zu einer translatorischen Schwingung mit einer Schwingungskomponente parallel zur Werkstückachse C1 angeregt wird. Die translatorische Schwingung kann entlang der Vorschubrichtung Z erfolgen, wobei die Vorschubrichtung Z parallel zur Werkstückachse C1 oder geneigt zur Werkstückachse C1 verlaufen kann.

Ebenso kann die Werkzeugspindel 15 dazu ausgebildet sein, die Schleifschnecke 16 zu einer Torsionsschwingung um die Schneckenachse B anzuregen. Dazu kann der Werkzeugspindelantrieb einen Frequenzumrichter aufweisen, der zur Erzeugung der Torsionsschwingung der Schleifschnecke 16 verwendet werden kann.

Zusätzlich oder alternativ kann der Werkzeugträgerantrieb des Werkzeugträgers 12 dazu ausgebildet sein, die Schleifschnecke 16 zu einer translatorischen Schwingung in Zustellrichtung X anzuregen, um die Durchdringungstiefe gezielt zu variieren.

Alternativ oder zusätzlich kann die Werkzeugmaschine 1 ein separates Werkzeugschwingungsmodul 151 aufweisen, welches dazu ausgebildet ist, den Shift-Schlitten 14 und/oder die Werkzeugspindel 15 zu einer translatorischen Schwingung in Shift-Richtung Y anzuregen und/oder die Werkzeugspindel 15 zu einer Torsionsschwingung um die Schneckenachse B anzuregen. Um so wenig Masse wie möglich anregen zu müssen und den Übertragungsweg von Werkzeugschwingungsmodul 151 zum Berührpunkt zwischen Schleifschnecke und Werkstück möglichst kurz zu halten, ist eine direkte Anregung der Werkzeugspindel 15, wie in Fig. 1 angedeutet, besonders vorteilhaft. Zur Anregung der Schwingung kann das Werkzeugschwingungsmodul 151 beispielsweise ein Piezoaktuator oder einen elektrodynamischen Shaker aufweisen. Um eine Torsionsschwingung anzuregen, können insbesondere auch exzentrisch zur Schneckenachse B angeordnete und mit der Werkzeugspindel 15 gekoppelte Massen verwendet werden, welche von Schwingungsmodulen zu in Drehrichtung gerichteten, translatorischen Schwingungen angeregt werden können. Alternativ oder zusätzlich ist auch eine rotatorisch gelagerte und mit der Werkzeugspindel gekoppelte Schwungscheibe, die über einen Piezoaktuator oder einen elektrodynamischen Shaker angeregt wird, denkbar.

Alternativ oder zusätzlich kann die Werkzeugmaschine 1 ein separates Werkzeugschwingungsmodul mit einem Piezoaktuator oder einem elektrodynamischen Shaker aufweisen, welches dazu ausgebildet ist, den Axialschlitten 13 zu einer translatorischen Schwingung mit einer Schwingungskomponente parallel zur Werkstückachse C1 anzuregen, und/oder welches dazu ausgebildet ist, den Werkzeugträger 12 zu einer translatorischen Schwingung in Zustellrichtung X anzuregen (in Fig. 1 nicht explizit eingezeichnet).

In Fig. 1 weist die Werkstückspindel 21 einen Werkstückspindelantrieb 211 auf, der dazu ausgebildet ist, die Werkstückspindel 21 zu einer Torsionsschwingung anzuregen, wobei die Torsionsschwingung zu einer Drehschwingung des auf der Werkstückspindel aufgespannten vorverzahnten Werkstücks 23 um die Werkstückachse C1 führt. Der Werkstückspindelantrieb 211 kann einen Frequenzumrichter aufweisen, der zur Erzeugung der Torsionsschwingung verwendet werden kann. Alternativ ist auch eine rotatorische Anregung über ein entsprechend ausgebildetes Aktivelement wie beispielsweise einem Piezoaktuator oder einem elektrodynamischen Shaker denkbar.

Weiter kann der Werkstückspindelantrieb 211 dazu ausgebildet sein, die Werkstückspindel 21 zu einer Biegeschwingung anzuregen, wobei die Biegeschwingung zu einer Präzession und/oder Nutation der Werkstückachse C1 und somit zu einer Verkippung und/oder einer Verlagerung des Werkstücks 23 relativ zur Schleifschnecke führt.

Der Werkstückspindelantrieb 211 kann zudem dazu ausgebildet sein, die Werkstückspindel 21 zu einer Translationsschwingung anzuregen, wobei die Translationsschwingung bevorzugt parallel zur Schneckenachse B in Shift-Richtung Y erfolgt, wodurch sich das Werkstück relativ zur Schleifschnecke entlang der Shift-Richtung Y hin- und her bewegt.

Alternativ oder zusätzlich kann die Werkzeugmaschine ein separates Werkstückschwingungsmodul 212 aufweisen, welches dazu ausgebildet ist, die Werkstückspindel zu einer Torsionsschwingung und/oder einer Biegeschwingung und/oder einer Translationsschwingung wie oben beschrieben anzuregen. Dazu kann das Werkstückschwingungsmodul beispielsweise Piezoaktuatoren umfassen, welche auf ein Lager der Werkstückspindel 21 radial wirken und diese somit zu einer Biegeschwingung und/oder radialen Translationsschwingung anregen, und/oder welche auf ein Lager der Werkstückspindel 21 axial wirken und diese somit zu einer translatorischen axialen Schwingung anregen. Das Werkstückschwingungsmodul kann ebenfalls ein am unteren Ende Werkstückspindel 21 angekoppelter elektrodynamischer Shaker für eine axiale und/oder radiale Anregung der Werkstückspindel 21 sein. Die axiale Anregung führt zu einer axialen translatorischen Bewegung, die radiale Anregung hingegen führt zu einer radialen translatorischen Bewegung und/oder einer Kippbewegung der Werkstückachse C1 um einen virtuellen Lagerpunkt und/oder einer Biegeschwingung der Werkstückachse C1.

Unter Berücksichtigung der im Wälzschleifprozess verwendeten Prozessparameter lässt sich die Erzeugungsfrequenz *f_{K}* bestimmen. Durch gezielte Wahl der Variationsfrequenz *f_{V}* wie voranstehend beschrieben, führen die Torsionsschwingung und/oder Biegeschwingung und/oder Translationsschwingung aufgrund der dadurch entstehenden relativen Zusatzbewegungen zwischen dem Werkstück 23 und der Schleifschnecke 16 zu einem gezielten Variieren der Durchdringungstiefe mit dem gewünschten Phasenversatz Δ*φ* zwischen den jeweils benachbarten Kontaktspuren.

### Gezieltes Variieren der Durchdringungstiefe durch geeignetes Abrichten der Schleifschnecke

Insbesondere falls eine Zahnflankenwelligkeit mit einer hohen Ordnung bezüglich der Schneckendrehfrequenz *f_{S}* gewünscht wird, können die dazu benötigten hochfrequenten Schwingungen mit einer exakt definierten Modulationsamplitude im Mikrometerbereich hohe Anforderungen an die beteiligten Maschinenachsen stellen.

Es ist daher alternativ oder zusätzlich denkbar, das gezielte Variieren der Durchdringungstiefe über ein entsprechendes Abrichten der Schleifschnecke zu erreichen.

Zur Erzeugung der Gangwelligkeit auf dem Schleifschneckengang kann als Abrichtwerkzeug eine Abrichtscheibe verwendet werden, welche eine Rundlaufabweichung und/oder eine Planlaufabweichung aufweist, wobei ein festes Drehwinkelverhältnis zwischen dem Abrichtwerkzeug und der Schleifschnecke gewählt wird, derart, dass die Rundlaufabweichung und/oder die Planlaufabweichung gezielt zur Erzeugung der Gangwelligkeit auf der Schleifschneckengangflanke genutzt werden kann. Alternativ kann die Gangwelligkeit auch durch Zeilenabrichten oder durch entsprechende Relativbewegungen zwischen dem Abrichtwerkzeug und der Schleifschnecke erzeugt werden.

Ebenso kann beim Abrichten ein Abrichtwerkzeug verwendet werden, das eine Abrichtflankenoberfläche mit einer wellenförmigen Abrichtflankenmodifikation aufweist, die während des Abrichtens auf die Schleifschnecke übertragen wird. Ein derartiges Abrichtwerkzeug kann beispielsweise in einem Positivverfahren hergestellt werden, wobei die Abrichtflankenmodifikation mittels eines Konditionierwerkzeugs, insbesondere einer zur Abrichtflankenoberfläche senkrecht stehenden schmalen rotierenden Konditionierscheibe, gezielt erzeugt werden können. Insbesondere kann das Abrichtwerkzeug zu einer Drehung um eine Abrichtdrehachse angetrieben werden, während das Konditionierwerkzeug zu einer Drehung um eine Konditionierdrehachse des Konditionierwerkzeugs angetrieben wird und dabei in einer Richtung, die einen normal zur Abrichtflankenoberfläche verlaufenden Anteil hat, zur Erzeugung der Abrichtflankenmodifikationen durch Materialabtragung von der Abrichtflankenoberfläche zugestellt wird. Bezüglich der diesem Vorgehen zugrundeliegenden Überlegungen und weiterer Ausführungsmöglichkeiten wird auf die am selben Tag wie die vorliegende Anmeldung eingereichte Patentanmeldung desselben Anmelders mit dem Titel "Abrichtwerkzeug zum Abrichten einer Schleifschnecke für die Wälzbearbeitung vorverzahnter Werkstücke" verwiesen.

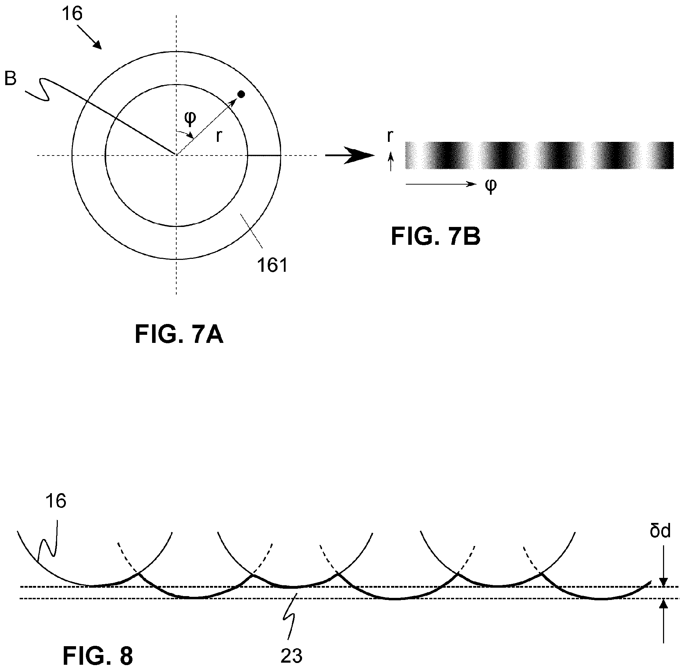

Fig. 7A zeigt eine schematische stirnseitige Ansicht einer Schleifschneckengangflanke eines einzelnen Schneckengangs einer Schleifschnecke 16 für eine Ganghöhe der Schleifschnecke. Die Schleifschneckengangflanke 161 weist auf einer zur Schneckenachse B senkrecht stehenden Projektionsebene eine Kreisringform auf, wobei die Kreisringform eine Radialrichtung mit einer Radialkoordinate r und eine Umfangrichtung mit einer Winkelkoordinate φ definiert. Die Schleifschneckengangflanke 161 in abgewickelter Form ist in Fig. 7B dargestellt und weist hier beispielhaft eine in Umfangrichtung periodische Gangwelligkeit mit Wellenfronten auf, welche in Radialrichtung verlaufen. Alternativ kann die Gangwelligkeit auch Wellenfronten aufweisen, welche beliebig bezüglich der Radialrichtung geneigt sind.

Die Gangwelligkeit ist ortsfest bezüglich der Schleifschneckenflanke und weist in Umfangrichtung in einem bestimmten radialen Abstand von der Schneckenachse B eine Wellenlänge *λ_{S}* auf.

Die Wellenlänge *λ_{S}* der Gangwelligkeit auf der Schleifschneckengangflanke der Schleifschnecke kann anhand einer Länge *U_{S}* des Schleifschneckengangs entlang der Umfangrichtung in dem oben genannten radialen Abstand, in dem die Wellenlänge definiert ist, für eine Umdrehung der Schleifschnecke in einen Welligkeitswinkel *θ_{S}* bezüglich der Schneckenachse B umgerechnet werden: ${θ}_{s} = \frac{{λ}_{S}}{{U}_{S}} 2 π$

Indem bei der Werkstückbearbeitung die Schleifschnecke mit einem geeigneten Verhältnis aus Shiftvorschubgeschwindigkeit und Axialvorschubgeschwindigkeit in Shift-Richtung Y bzw. in Vorschubrichtung Z verschoben wird, kann die Gangwelligkeit auf der Schleifschneckengangflanke auf das im Wälzeingriff stehende vorverzahnte Werkstück abgebildet werden, um dadurch eine gezielte Zahnflankenwelligkeit zu erzeugen. Relevant ist hierbei die Welligkeit auf der Schleifschneckenflanke entlang des Schneckenkontaktpfads auf dem Schleifschneckengang, wobei diese Welligkeit bevorzugt eine konstante Wellenlänge *λ_{S}*' entlang des Schneckenkontaktpfads aufweist. Der Schneckenkontaktpfad kann im Allgemeinen gegenüber der Umfangrichtung geneigt sein, wodurch sich die Wellenlänge in Umfangrichtung *λ_{S}* von der Wellenlänge entlang des Schneckenkontaktpfads *λ_{S}'* unterscheiden kann.

Ein Schneckenkontaktpfad auf dem Schleifschneckengang ist jeweils mit einer Kontaktspur auf der Zahnflanke des Werkstücks assoziiert. Somit wird die Welligkeit vom Schneckenkontaktpfad entlang der Kontaktspur auf die Werkstückflanke übertragen. Wird eine Beschreibung der Kontaktspur über den Wälzweg verwendet, weist die erzeugte Zahnflankenwelligkeit entlang der Kontaktspur eine Wellenlänge *λ_{Z}* auf, die ausgedrückt werden kann als ${λ}_{Z} = S ⋅ {λ}_{S} ′ ,$ wobei S ein Skalierungsfaktor ist, der ausschliesslich vom Verhältnis der Länge der Kontaktspur entlang des Wälzwegs zur Länge des Schneckenkontaktpfads abhängt.

### Schleifschnecke mit genau einem Schleifschneckengang

Weist die Schleifschnecke beispielsweise genau einen Schleifschneckengang auf (eingängige Schleifschnecke) und weist eine Schleifschneckengangflanke dieses Schleifschneckengangs eine Gangwelligkeit auf, so überträgt sich diese Gangwelligkeit, sofern kein Shift-Vorschub stattfindet, ohne Phasenversatz von Kontaktspur zu Kontaktspur auf die Zahnflanke des Werkstücks. Findet hingegen Shift-Vorschub statt, d.h. findet eine Bewegung der Schleifschnecke parallel zur Schneckenachse B statt, so führt dies im Schleifprozess zu einer kontinuierlichen Verlagerung des Schneckenkontaktpfads auf der Schleifschneckengangflanke des Schleifschneckengangs während der relativen Bewegung zwischen der Schleifschnecke und dem Werkstück parallel zur Werkstückachse C1. Da die Gangwelligkeit aber ortsfest in Bezug auf die Schleifschneckenflanke ist und somit eine relative Verlagerung des Schneckenkontaktpfads gegenüber der Gangwelligkeit stattfindet, wird die Gangwelligkeit durch den Shift-Vorschub nun phasenverschoben auf die Zahnflanke abgebildet und es entsteht effektiv ein Phasenversatz Δ*φ* zwischen den Zahnflankenwelligkeiten benachbarter Kontaktspuren auf der Zahnflankenoberfläche des Werkstücks.

Betrachtet man ein Schnittprofil der Schleifschnecke entlang der Schneckenachse B (Axialschnitt) und misst den Abstand zwischen zwei auf gleichem Radius liegenden Punkten auf zwei aufeinander folgenden Schleifschneckenflanken im Schnittprofil, erhält man die Axialteilung *pₓ* der Schleifschnecke. Wenn die Schleifschnecke genau um eine Axialteilung *pₓ* in Richtung der Schneckenachse geshiftet wird, dann verlagert sich der Schneckenkontaktpfad exakt um einen Winkel von 2*π* auf dem Schleifschneckengang in Umfangsrichtung.

Für eine Verlagerung des Schneckenkontaktpfads, welche einen gewünschten Phasenversatz Δ*φ* zwischen den Zahnflankenwelligkeiten benachbarter Kontaktspuren auf der Zahnflankenoberfläche des Werkstücks zur Folge hat, wird folgender Shift-Weg *x_{y}* in Shift-Richtung Y benötigt: ${x}_{y} = {p}_{x} ⋅ \frac{{θ}_{s} ⋅ \frac{Δ φ}{2 π}}{2 π} = \frac{{p}_{x} ⋅ {λ}_{S} ⋅ Δ φ}{2 π ⋅ {U}_{S}}$

Dieser Shift-Weg *x_{y}* muss in der Zeitspanne *t_{K}* zurückgelegt werden. Somit ergibt sich eine Shift-Vorschubgeschwindigkeit *v_{y}* von ${v}_{y} = \frac{{x}_{y}}{{t}_{K}} = \frac{{p}_{x} ⋅ {λ}_{S} ⋅ Δ φ}{2 π ⋅ {U}_{S} ⋅ {t}_{K}} ,$ wobei der Phasenversatz Δ*φ* und der Welligkeitswinkel *pₛ* im Bogenmass einzusetzen sind.

### Schleifschnecke mit mindestens zwei Schleifschneckengängen

Wird eine mehrgängige Schleifschnecke verwendet, so hat dies mehrere Auswirkungen: Um die Gangsteigung zu erhalten, wird die Axialteilung *pₓ* mit der Anzahl der Schleifschneckengänge n multipliziert. Bei einer mehrgängigen Schleifschnecke ist die Gangsteigung also um einen Faktor n höher als bei einer eingängigen Schleifschnecke. Bei gleicher Schneckendrehfrequenz bewegt sich ein Schneckengang einer mehrgängigen Schleifschnecke im Vergleich zum Schneckengang einer eingängigen Schleifschnecke schneller durch den Eingriff, wobei sich dessen geometrische Länge bezogen auf das Werkstück nur unwesentlich vergrössert. Somit befindet sich der Schneckengang bei gleicher Werkstückdrehzahl kürzer im Eingriff, weshalb der Schneckenkontaktpfad bezogen auf eine Umdrehung der Schleifschnecke kürzer wird. Wird der Schneckenkontaktpfad auf der Schleifschnecke kürzer, enthält er bei gleicher Wellenlänge weniger Wellenperioden, die auf das Werkstück abgebildet werden. Dementsprechend muss bei einer mehrgängigen Schleifschnecke die Wellenlänge der Welligkeit entlang des Schneckenkontaktpfades entsprechend reduziert werden, wenn bei gleichem Shift-Vorschub derselbe Phasenversatz Δφ wie mit einer eingängigen Schleifschnecke erzielt werden soll.

Die Schneckenkontaktpfade weisen zudem Schneckenkontaktpfad-Startpunkte auf, die in Umfangrichtung der Schleifschnecke um einen Winkel Δ*α* = 2*π*/*n* zueinander versetzt angeordnet sind. Die Welligkeit an den jeweiligen Schneckenkontaktpfad-Startpunkten der bezüglich einer Eingriffsfolge der Schleifschneckengänge nacheinander in den Eingriff kommenden Schneckenkontaktpfade können relativ zueinander phasenverschoben sein. Wird ohne Shift-Vorschub geschliffen, kann dieser Phasenunterschied direkt zur Erzeugung eines Phasenversatzes Δ*φ* ≠ 0 genutzt werden, denn weisen die Welligkeiten der verschiedenen Schleifschneckengänge dieselbe Wellenlänge auf, so überträgt sich dieser Phasenunterschied zwischen den Schneckenkontaktpfad-Startpunkten entsprechend auf die Zahnflanke.

Ein zusätzlicher Shift-Vorschub führt zu einem zusätzlichen Phasenversatz nach oben beschriebenem Zusammenhang, der sich dem durch den Phasenunterschied der Welligkeiten auf den nacheinander in Eingriff kommenden Schleifschneckengängen entstehenden Phasenversatz überlagert.

Zudem kann bei mehreren Schleifschneckengängen mindestens einer der Schleifschneckengänge gegenüber den anderen vorstehen, d.h. anstatt einer perfekten regelmässigen Anordnung der Schleifschneckengänge entlang der Schneckenachse B kann mindestens einer der Schleifschneckengänge durch einen Gangteilungsfehler entlang der Schneckenachse B verschoben sein. Fig. 8 stellt wiederum eine Schnittansicht einer bearbeiteten Zahnflanke (durchgezogene Linie) in Breitenrichtung dar, wobei jede zweite Kontaktspur durch den vorstehenden Schneckengang erzeugt wurde und somit eine um einen Durchdringungsunterschied δd grössere Durchdringungstiefe d aufweist als ihre jeweils benachbarten Kontaktspuren.

### Beispiele - Erzeugung gewünschter Zahnflankenwelligkeiten

### Beispiel 1: Erzeugung von um 180° phasenverschobenen Zahnflankenwelligkeiten durch relative Zusatzbewegungen

Die Prozessparameter des Wälzschleifprozesses können beliebig, aber konstant gewählt werden. Daraus lässt sich die Zeitspanne *t_{K}* bzw. die Erzeugungsfrequenz *f_{K}* bestimmen. Nach obiger Formel bestimmt sich der nichtganzzahlige Teil der Ordnung für einen Phasenversatz von Δ*φ* = *π* (180°) folgendermassen: $\left(P-floor\left(P\right)\right) = \frac{Δ φ}{2 π} = \frac{π}{2 π} = 0.5$

Der Phasenversatz kann also eingestellt werden mit den Ordnungen *P* = *i +* 0.5 mit $i ∈ {ℕ}_{0}^{+}$. Damit lassen sich die Variationsfrequenzen *f_{V}* der externen Anregung bestimmen: ${f}_{V} = P ⋅ {f}_{K} = \left(i+0.5\right) ⋅ {f}_{K}$

Vorzugsweise wird die Ordnung P so hoch gewählt (vorzugsweise höher als die Zahneingriffsordnung), dass mehrere Wellenperiode pro Kontaktspur auf der Zahnflanke erzeugt werden.

### Beispiel 2: Erzeugung von um 90° phasenverschobenen Zahnflankenwelligkeiten durch Zusatzbewegungen

Hier beträgt der Phasenversatz $Δ φ = \frac{π}{2}$. Damit ergeben sich mit einem nichtganzzahligen Anteil der Ordnung von 0.25 folgende Variationsfrequenzen *f_{V}*: ${f}_{V} = P ⋅ {f}_{K} = \left(i+0.25\right) ⋅ {f}_{K}$

### Beispiel 3: Erzeugung von Zahnflankenwelligkeiten mit nicht-konstantem Phasenversatz durch Zusatzbewegungen

Es gelten die voranstehend erläuternden Zusammenhänge, wobei die entsprechenden Grössen nun von einer Zeitvariablen t abhängig sind: $P \left(t\right) = \frac{{f}_{V} \left(t\right)}{{f}_{K} \left(t\right)}$

Diese Zeitabhängigkeit kann entweder durch transiente/nicht-stationäre Prozessparameter wie z.B. einer zeitabhängigen Schneckenfrequenz *f_{S}*(*t*) und/oder einer zeitabhängigen Shift-Vorschubgeschwindigkeit *v_{y}*(*t*) und/oder einer zeitabhängigen Axialvorschubgeschwindigkeit erzeugt werden. Diese führen über die Wälzkopplung zu einer zeitabhängigen Drehfrequenz des Werkstücks. Falls ein separates Werkzeugschwingungsmodul und/oder Werkstückschwingungsmodul verwendet wird, können auch deren externe Anregungsfrequenzen zeitabhängig gewählt werden.

Um einen nicht-konstanten Phasenversatz Δ*φ* ≠ 0 der Zahnflankenwelligkeiten benachbarter Kontaktspuren entlang der voranstehend definierten virtuellen Referenzlinie zu erhalten, reicht eine Zeitabhängigkeit der Variationsfrequenz *f_{V}*(*t*) und *f_{K}*(*t*) an sich nicht zwangsläufig aus:
Beispielsweise kann die zeitabhängige Variationsfrequenz *f_{V}*(*t*) periodisch moduliert sein: ${f}_{V} \left(t\right) = {f}_{V , 0} + {A}_{mod} sin \left(2{πf}_{mod}t\right) ,$ wobei *f*_{*V*,0} die Grundvariationsfrequenz darstellt, *f_{mod}* eine Modulationsfrequenz darstellt und *A_{mod}* einem entsprechenden Amplitudenterm der Frequenzmodulation bezeichnet.

Sind nun sowohl die Ordnung $P = \frac{{f}_{V}}{{f}_{K}}$, als auch die Modulationsordnung ${P}_{M} = \frac{{f}_{mod}}{{f}_{V , 0}}$ jeweils ganzzahlig, so entsteht kein Phasenversatz zwischen den Zahnflankenwelligkeiten benachbarter Kontaktspuren, d.h. Δ*φ =* 0. Ist hingegen die Ordnung *P* und/oder die Modulationsordnung *P_{M}* nichtganzzahlig, so entsteht ein periodisch modulierter, nicht-konstanter Phasenversatz Δ*φ* ≠ 0.

Die zeitabhängige Variationsfrequenz *f_{V}*(*t*) kann stochastisch anstatt periodisch moduliert sein, wodurch ein stochastisch modulierter, nicht-konstanter Phasenversatz Δ*φ* erzeugt wird.

Es ist ebenfalls denkbar, den Amplitudenterm *A_{mod}* der Frequenzmodulation zeitlich zu variieren.

Dieselben Überlegungen gelten mutatis mutandis auch für die zeitabhängige Erzeugungsfrequenz *f_{K}*(*t*)*,* welche ebenfalls periodisch oder stochastisch moduliert sein kann.

Somit ergibt sich eine grosse Anzahl an Freiheitsgraden, mit welchen durch Erzeugung eines nicht-konstanten Phasenversatz Δ*φ* ≠ 0 eine diffus erscheinende Oberflächenstruktur gezielt erzeugt werden kann.

### Beispiel 4: Erzeugung von um 180° oder um 90° phasenverschobenen Zahnflankenwelligkeiten mit einer entsprechend modifizierten Schleifschnecke

Bei einer eingängigen Schleifschnecke kann beispielsweise eine Shiftvorschubgeschwindigkeit *v_{y}* gemäss den voranstehend beschriebenen Zusammenhängen gewählt werden: ${v}_{y} = \frac{{x}_{y}}{{t}_{K}} = \frac{{p}_{x} ⋅ {λ}_{S} ⋅ Δ φ}{2 π ⋅ {U}_{S} ⋅ {t}_{K}}$ wobei Δ*φ =* 180° resp. Δ*φ* = 90° eingesetzt wird.

Alternativ kann eine mehrgängige Schleifschnecke verwendet werden, bei der die Welligkeiten der direkt nacheinander in den Eingriff kommenden Schleifschneckengänge entlang der Schneckenkontaktpfade jeweils um 180° resp. 90° zueinander phasenverschoben sind. Wird eine mehrgängige Schleifschnecke verwendet, bei der die Welligkeiten der direkt nacheinander in den Eingriff kommenden Schleifschneckengänge entlang der Schneckenkontaktpfade zwar zueinander phasenverschoben sind, aber jeweils nicht um 180° resp. 90°, so kann die Differenz zur Erzeugung des gewünschten Phasenversatzes von 180° resp. 90° durch eine gemäss voranstehender Formel gewählte Shiftvorschubgeschwindigkeit *v_{y}* kompensiert werden.

### Beispiel 6: Erzeugung von Welligkeiten mit nicht-konstantem Phasenversatz mit einer entsprechend modifizierten Schleifschnecke

Durch ein variierendes Drehzahlverhältnis zwischen einem modifizierten Abrichtwerkzeug und der Schleifschnecke während des Abrichtens kann eine Welligkeit auf der Schleifschneckenflanke erzeugt werden, welche entlang des Schneckenkontaktpfads eine variierende, d.h. nicht-konstante Wellenlänge aufweist. Für die Übertragung der Welligkeit vom Schneckenkontaktpfad auf der Schleifschneckengangflanke auf die Kontaktspur auf dem Werkstück gelten die voranstehend erläuterten Zusammenhänge, wodurch ein nicht-konstanter Phasenversatz Δ*φ* zwischen den Zahnflankenwelligkeiten benachbarter Kontaktspuren auf der Zahnflanke des Werkstücks entsteht. Ein zusätzlicher Shift-Vorschub kann ebenfalls zur Erzeugung eines zusätzlichen Phasenversatzes verwendet werden. Ebenso kann hier eine eingängige oder eine mehrgängige Schleifschnecke, bei denen die Welligkeiten der direkt nacheinander in den Eingriff kommenden Schleifschneckengänge entlang der Schneckenkontaktpfade phasenverschoben sind, verwendet werden.

### Überlagerung mit nicht-kontrollierten stochastischen Prozessen

Um eine besonders diffuse und somit in ihrem Geräuschverhalten optimierte Oberflächenstruktur zu erzeugen, wird das gezielte Variieren der Durchdringungstiefe in einer besonders bevorzugten Ausführungsform mit nicht-kontrollierten, insbesondere stochastisch auftretenden, Abweichungen der Durchdringungstiefe d überlagert.

Diese nicht-kontrollierten Abweichungen der Durchdringungstiefe d können auf Abweichungen im Abrichtprozess der Schleifschnecke basieren, beispielsweise auf
Führungsabweichungen in Shift-Richtung Y beim Abrichten (Y-Achse), was zu lokalen Gangteilungsfehlern führen kann, und/oder
Führungsabweichungen der Werkzeugspindel 15, was ebenfalls zu lokalen Gangteilungsfehlern führen kann, und/oder
Abweichungen des Abrichtwerkzeugs 33 im montierten Zustand, umfassend:
   Abweichung des Abrichtwerkzeugs 33 selbst, und/oder
   Abweichung beim Aufspannen des Abrichtwerkzeugs 33, und/oder
   Abweichungen der Abrichtspindel 32.

Alternativ oder zusätzlich können diese nicht-kontrollierten Abweichungen der Durchdringungstiefe auf Abweichungen während der Schleifbearbeitung des vorverzahnten Werkstücks basieren, beispielsweise auf
Abweichungen in der Wälzkopplung, umfassend:
   Abweichung in einem Antrieb der Werkstückspindel 21, und/oder
   Abweichung in einem Antrieb des Shift-Schlittens 14, und/oder
   Abweichungen der Schneckendrehfrequenz f_{s,} und/oder
   Abweichungen in Zustellrichtung X, und/oder
   Abweichungen im Axialantrieb des Axialschlittens 13, und/oder
ungewollte Schwingungen von Peripheriegeräten in der Werkzeugmaschine 1, und/oder
   von den Antrieben angeregte Strukturschwingungen der Maschine.

Idealerweise wird für das gezielte Variieren der Durchdringungstiefe eine Modulationsamplitude gewählt, welche in einem Bereich zwischen dem 0.2-Fachen und 5-Fachen eines Schwankungsmasses für die nicht-kontrollierten Abweichungen der Durchdringungstiefe d liegt, wobei das Schwankungsmass insbesondere einer Standardabweichung oder einem Interquartilsabstand der nicht-kontrollierten Abweichungen der Durchdringungstiefe d entspricht.

In einer bevorzugten Ausführungsform des Verfahrens wird das Schwankungsmass der nicht-kontrollierten Abweichungen der Durchdringungstiefe d ermittelt und die Modulationsamplitude gezielt in Abhängigkeit von dem ermittelten Schwankungsmass gewählt.

Typische Werte für das Schwankungsmass können zwischen 0.1 µm und 10 µm, insbesondere zwischen 0.3 µm und 3 µm, liegen.

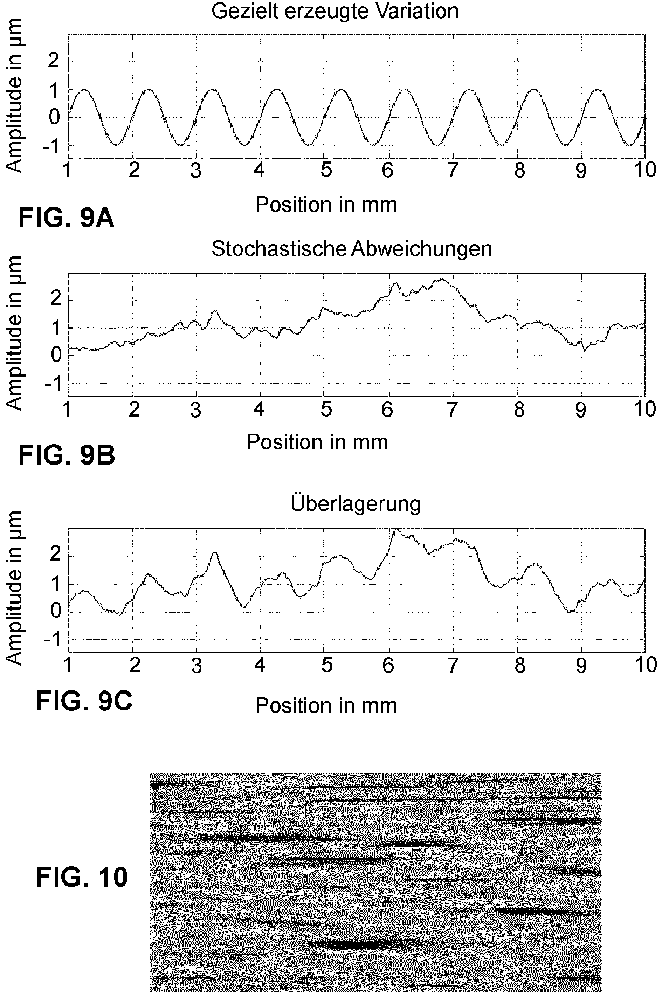

Die Figuren 9A-9C illustrieren eine derartige Überlagerungssituation: In Fig. 9A ist die gezielt erzeugte Variation der Durchdringungstiefe d als Funktion einer Position entlang des Wälzweges dargestellt, wobei in diesem Beispiel die Durchdringungstiefe sinusförmig mit einer Modulationsamplitude von 1 µm variiert. In Fig. 9B sind nicht-kontrollierte, stochastisch auftretende Abweichungen der Durchdringungstiefe d dargestellt. Die Standardabweichung der nicht-kontrollierten Abweichungen der Durchdringungstiefe d beträgt in diesem Beispiel 0.44 µm. Fig. 9C zeigt eine resultierende Überlagerung der gezielten Variation und der nicht-kontrollierten Abweichungen.

Fig. 10 zeigt eine Abbildung einer realen, vermessenen Zahnflanke mit einer anhand eines erfindungsgemässen Verfahren modifizierten, besonders diffusen Oberflächenstruktur.

### BEZUGSZEICHENLISTE

| | | | |
|---|---|---|---|
| 1 | Wälzschleifmaschine | 40 | Maschinensteuerung |
| 11 | Maschinenbett | 41 | Achsmodule |
| 12 | Werkzeugträger | 42 | Steuerrechner |
| 13 | Axialschlitten | 43 | Bedientafel |
| 14 | Shift-Schlitten | 44 | Überwachungseinrichtung |
| 15 | Werkzeugspindel | B | Schneckenachse |
| 151 | Werkzeugschwingungsmodul | C1 | Werkstückachse |
| 16 | Schleifschnecke | C3 | Schwenkachse |
| 161 | Schleifschneckengangflanke | C4 | Schwenkachse |
| 18 | Schwingungssensor | X | Zustellrichtung |
| 19 | Positionssensor | Y | Shift-Richtung |
| 20 | Werkstückträger | Z | Vorschubrichtung |
| 21 | Werkstückspindel | b1,b2 | Einzelkontaktspurbreite |
| 211 | Werkstückspindelantrieb | b_{eff} | effektive Kontaktspurbreite |
| 212 | Werkstückschwingungsmodul | S | Kontaktspurabstand |
| 23 | Werkstück | d | Durchdringungstiefe |
| 30 | Abrichteinrichtung | r | Radialkoordinate |
| 31 | Schwenkeinrichtung | φ | Winkelkoordinate |
| 32 | Abrichtspindel | | |
| 33 | Abrichtwerkzeug | | |

## Patentansprüche

1. Verfahren zur Erzeugung einer modifizierten Oberflächenstruktur auf einer Zahnflanke eines vorverzahnten Werkstücks (23),
das Verfahren umfassend:
Antreiben einer Schleifschnecke (16) zu einer Drehung um eine Schneckenachse (B);
Antreiben des vorverzahnten Werkstücks (23) zu einer Drehung um eine Werkstückachse (C1), wobei die Schleifschnecke (16) und das vorverzahnte Werkstück (23) in einem Wälzeingriff stehen;
Erzeugen einer relativen Bewegung zwischen der Schleifschnecke (16) und dem vorverzahnten Werkstück (23), wobei die relative Bewegung eine Axialkomponente parallel zur Werkstückachse (C1) aufweist, derart, dass auf der Zahnflanke des vorverzahnten Werkstücks (23) eine Mehrzahl benachbarter Kontaktspuren entsteht, wobei die Kontaktspuren bezüglich einer Werkstück-Breitenrichtung zueinander beabstandet verlaufen,
**dadurch gekennzeichnet, dass** das Verfahren weiter umfasst:
gezieltes Variieren einer Durchdringungstiefe (d) zwischen der Schleifschnecke (16) und dem vorverzahnten Werkstück (23) entlang der jeweiligen Kontaktspur zur Erzeugung einer Zahnflankenwelligkeit mit einer Mehrzahl an Wellenperioden entlang besagter Kontaktspur, derart, dass die Zahnflankenwelligkeiten benachbarter Kontaktspuren an einer beliebigen vorgegebenen Position in einer Werkstück-Höhenrichtung um einen Phasenversatz zueinander verschoben sind,
wobei der Phasenversatz zwischen 90° und 270° beträgt, und/oder
wobei der Phasenversatz zu den jeweils benachbarten Kontaktspuren von Kontaktspur zu Kontaktspur variiert, und/oder
wobei der Phasenversatz zu den benachbarten Kontaktspuren entlang der jeweiligen Kontaktspur variiert.

2. Verfahren nach Anspruch 1, wobei sich die Schleifschnecke (16) mit einer Schneckendrehfrequenz (fₛ) dreht und wobei das gezielte Variieren der Durchdringungstiefe (d) mit einer Variationsfrequenz (fᵥ) erfolgt, welche grösser als die Schneckendrehfrequenz (fₛ) ist.

3. Verfahren nach Anspruch 1 oder 2, wobei das gezielte Variieren der Durchdringungstiefe (d) umfasst:
Erzeugen einer gezielten relativen Zusatzbewegung zwischen dem vorverzahnten Werkstück (23) und der Schleifschnecke (16).

4. Verfahren nach Anspruch 3, wobei das Erzeugen der gezielten relativen Zusatzbewegung umfasst:
Anregen einer translatorischen Schwingung der Schleifschnecke (16) mit einer Schwingungskomponente in einer Zustellrichtung (X) radial zur Werkstückachse (C1), und/oder
Anregen einer translatorischen Schwingung der Schleifschnecke (16) mit einer Schwingungskomponente parallel zur Werkstückachse (C1), und/oder
Anregen einer translatorischen Schwingung der Schleifschnecke (16) mit einer Schwingungskomponente in einer Shift-Richtung (Y) parallel zur Schneckenachse (B), und/oder
Anregen einer Torsionsschwingung der Schleifschnecke um die Schneckenachse (B).

5. Verfahren nach Anspruch 3 oder 4, wobei das vorverzahnte Werkstück (23) auf einer Werkstückspindel (21) angeordnet ist und wobei das Erzeugen der gezielten relativen Zusatzbewegung umfasst:
Anregen einer Torsionsschwingung der Werkstückspindel (21) um die Werkstückachse (C1), und/oder
Anregen einer Biegeschwingung der Werkstückspindel (21), und/oder
Anregen einer Translationsschwingung der Werkstückspindel (21).

6. Verfahren nach einem der vorhergehenden Ansprüche, wobei die Schleifschnecke (16) auf einer Schleifschneckengangflanke (161) eines Schleifschneckengangs eine Gangwelligkeit aufweist, und wobei das gezielte Variieren der Durchdringungstiefe (d) zur Erzeugung der Zahnflankenwelligkeit umfasst:
Übertragen der Gangwelligkeit der Schleifschneckengangflanke (161) auf die mit der Schleifschnecke (16) im Wälzeingriff stehende Zahnflanke des vorverzahnten Werkstücks (23).

7. Verfahren nach Anspruch 6, weiter umfassend:
Abrichten der Schleifschnecke (16) mit einem Abrichtwerkzeug (33), wobei das Abrichtwerkzeug (33) eine Rundlaufabweichung und/oder eine Planlaufabweichung aufweist und wobei ein festes oder variables Drehwinkelverhältnis zwischen dem Abrichtwerkzeug (33) und der Schleifschnecke (16) vorgegeben wird, derart, dass die Rundlaufabweichung und/oder die Planlaufabweichung die Gangwelligkeit auf der Schleifschneckengangflanke (161) erzeugt.

8. Verfahren nach Anspruch 6 oder 7,
wobei die Schleifschnecke (16) mindestens zwei Schleifschneckengänge aufweist,
wobei jeder der mindestens zwei Schleifschneckengänge jeweils eine Gangwelligkeit entlang eines Schneckenkontaktpfads aufweist, und
wobei die mindestens zwei Schleifschneckengänge jeweils auf der Zahnflanke benachbarte Kontaktspuren erzeugen, wobei jede Kontaktspur auf der Zahnflanke mit einem der mindestens zwei Schneckenkontaktpfade assoziiert ist, und
wobei sich die auf den betreffenden Schleifschneckengängen entlang der Schneckenkontaktpfade erzeugten Gangwelligkeiten vorzugsweise unterscheiden.

9. Verfahren nach Anspruch 8, wobei die Schneckenkontaktpfade jeweils einen Schneckenkontaktpfad-Startpunkt aufweisen, welcher mit einem Kontaktspur-Startpunkt der jeweiligen Kontaktspur auf der Zahnflanke assoziiert ist, wobei die Gangwelligkeiten der mindestens zwei Schleifschneckengänge am jeweiligen Schneckenkontaktpfad-Startpunkt zueinander phasenverschoben sind.

10. Verfahren nach Anspruch 8 oder 9, wobei die Gangwelligkeiten der mindestens zwei Schleifschneckengänge einen Wellenlängenunterschied aufweisen, und/oder
wobei die Gangwelligkeiten der mindestens zwei Schleifschneckengänge einen Welligkeitsamplitudenunterschied aufweisen.

11. Verfahren nach einem der vorhergehenden Ansprüche,
wobei die Schleifschnecke (16) mindestens zwei Schleifschneckengänge aufweist, das Verfahren weiter umfassend:
Abrichten einer der Schleifschneckengänge der Schleifschnecke (16) mit einem konstanten Gangteilungsfehler zur Erzeugung eines vorstehenden Schleifschneckengangs, wobei der Gangteilungsfehler derart gewählt ist, dass der vorstehende Schleifschneckengang eine grössere Durchdringungstiefe (d) erzielt als seine bezüglich einer Eingriffsfolge an der Zahnflanke vorangehenden und nachfolgenden Schleifschneckengänge, derart, dass der vorstehende Schleifschneckengang die durch seine vorangehenden Schleifschneckengänge entstandenen Kontaktspuren mindestens teilweise überschleift.

12. Verfahren nach einem der vorhergehenden Ansprüche, wobei das gezielte Variieren der Durchdringungstiefe mit nicht-kontrollierten, insbesondere stochastisch auftretenden, Abweichungen der Durchdringungstiefe (d) überlagert ist, und wobei das gezielte Variieren der Durchdringungstiefe (d) mit einer Modulationsamplitude erfolgt, welche in einem Bereich zwischen dem 0.2-Fachen und 5-Fachen eines Schwankungsmasses für die nicht-kontrollierten Abweichungen der Durchdringungstiefe (d) liegt,
wobei das Schwankungsmass insbesondere einer Standardabweichung oder einem Interquartilsabstand der nicht-kontrollierten Abweichungen der Durchdringungstiefe (d) entspricht,
insbesondere, wobei das Schwankungsmass der nicht-kontrollierten Abweichungen der Durchdringungstiefe (d) ermittelt wird und die Modulationsamplitude gezielt in Abhängigkeit von dem ermittelten Schwankungsmass gewählt wird.

13. Werkzeugmaschine, aufweisend:
eine Werkzeugspindel (15), die dazu ausgebildet ist, eine Schleifschnecke (16) zu einer Drehung um eine Schneckenachse (B) aufzunehmen;
eine Werkstückspindel (21), die dazu ausgebildet ist, ein vorverzahntes Werkstück (23) zu einer Drehung um eine Werkstückachse (C1) aufzunehmen;
einen Axialschlitten (13) mit einem Axialantrieb zur Erzeugung einer relativen Bewegung zwischen der Werkzeugspindel (15) und der Werkstückspindel (21), wobei die relative Bewegung eine Axialkomponente parallel zur Werkstückachse (C1) aufweist, und
eine Steuerung, die dazu ausgebildet ist, das Verfahren eines der Ansprüche 1 bis 12 auszuführen.

14. Werkzeugmaschine nach Anspruch 13, umfassend einen Shift-Schlitten (14) mit einem Shift-Antrieb zur Erzeugung einer Verschiebung der Schleifschnecke (16) in einer Shift-Richtung (Y) parallel zur Schneckenachse (B),
wobei der Shift-Antrieb dazu ausgebildet ist, den Shift-Schlitten (14) zu einer translatorischen Schwingung in Shift-Richtung (Y) anzuregen, und/oder
wobei der Axialantrieb dazu ausgebildet ist, den Axialschlitten (13) zu einer translatorischen Schwingung mit einer Schwingungskomponente parallel zur Werkstückachse (C1) anzuregen, und/oder
wobei die Werkzeugspindel (15) dazu ausgebildet ist, die Schleifschnecke (16) zu einer Torsionsschwingung um die Schneckenachse (B) anzuregen, und/oder
wobei die Werkzeugmaschine (1) einen Werkzeugträger (12) mit einem Werkzeugträgerantrieb zur Erzeugung einer Zustellbewegung der Schleifschnecke (16) in einer Zustellrichtung (X) radial zur Werkstückachse (C1) aufweist, wobei der Werkzeugträgerantrieb dazu ausgebildet ist, die Schleifschnecke (16) zu einer translatorischen Schwingung in Zustellrichtung (X) anzuregen; und/oder
wobei die Werkzeugmaschine (1) mindestens ein separates Werkzeugschwingungsmodul (151) aufweist, welches dazu ausgebildet ist, den Shift-Schlitten (14) und/oder die Werkzeugspindel (21) zu einer translatorischen Schwingung in Shift-Richtung (Y) anzuregen, und/oder
welches dazu ausgebildet ist, den Axialschlitten (13) zu einer translatorischen Schwingung mit einer Schwingungskomponente parallel zur Werkstückachse (C1) anzuregen, und/oder
welches dazu ausgebildet ist, den Werkzeugträger (12) zu einer translatorischen Schwingung in Zustellrichtung (X) anzuregen, und/oder
welches dazu ausgebildet ist, die Werkzeugspindel (15) zu einer Torsionsschwingung um die Schneckenachse (B) anzuregen.

15. Werkzeugmaschine nach Anspruch 13 oder 14, umfassend einen Werkstückspindelantrieb (211) zum Antreiben der Werkstückspindel (21),
wobei der Werkstückspindelantrieb dazu ausgebildet ist, die Werkstückspindel (21) zu einer Torsionsschwingung und/oder einer Biegeschwingung und/oder einer Translationsschwingung anzuregen; und/oder
wobei die Werkzeugmaschine (1) mindestens ein separates Werkstückschwingungsmodul (212) aufweist, welches dazu ausgebildet ist, die Werkstückspindel (21) zu einer Torsionsschwingung und/oder einer Biegeschwingung und/oder einer Translationsschwingung anzuregen.

## Claims

1. A method for producing a modified surface structure on a tooth flank of a pre-toothed workpiece (23),
the method comprising:
driving a grinding worm (16) to rotate about a worm axis (B);
driving the pre-toothed workpiece (23) to rotate about a workpiece axis (C1), wherein the grinding worm (16) and the pre-toothed workpiece (23) are in rolling engagement;
generating a relative movement between the grinding worm (16) and the pre-toothed workpiece (23), the relative movement having an axial component parallel to the workpiece axis (C1), such that a plurality of adjacent contact tracks is produced on the tooth flank of the pre-toothed workpiece (23), the contact tracks extending at a distance from one another with respect to a workpiece face width direction,
**characterized in that** the method further comprises:
deliberately varying a penetration depth (d) between the grinding worm (16) and the pre-toothed workpiece (23) along the respective contact track to generate a tooth flank waviness with a plurality of wave periods along said contact track, such that the tooth flank waviness of adjacent contact tracks at any given position in a workpiece depth direction are shifted relative to one another by a phase offset,
wherein the phase offset is between 90° and 270°, and/or
wherein the phase offset to the respective adjacent contact tracks varies from contact track to contact track, and/or
wherein the phase offset to the adjacent contact tracks varies along the respective contact track.

2. The method of claim 1, wherein the grinding worm (16) rotates at a worm rotational frequency (fₛ) and wherein the deliberate variation of the penetration depth (d) takes place at a variation frequency (fᵥ) which is greater than the worm rotational frequency (fₛ).

3. The method of claim 1 or 2, wherein the deliberate variation of the penetration depth (d) comprises:
generating a deliberate relative additional movement between the pre-toothed workpiece (23) and the grinding worm (16).

4. The method of claim 3, wherein generating the deliberate relative additional movement comprises:
exciting a translational vibration of the grinding worm (16) with a vibration component in an infeed direction (X) radial to the workpiece axis (C1), and/or
exciting a translational vibration of the grinding worm (16) with a vibration component parallel to the workpiece axis (C1), and/or
exciting a translational vibration of the grinding worm (16) with a vibration component in a shift direction (Y) parallel to the worm axis (B), and/or
exciting a torsional vibration of the grinding worm about the worm axis (B).

5. The method of claim 3 or 4, wherein the pre-toothed workpiece (23) is arranged on a workpiece spindle (21) and wherein generating the deliberate relative additional movement comprises:
exciting a torsional vibration of the workpiece spindle (21) about the workpiece axis (C1), and/or
exciting a bending vibration of the workpiece spindle (21), and/or
exciting a translational vibration of the workpiece spindle (21).

6. The method of any one of the preceding claims, wherein the grinding worm (16) has a thread waviness on a grinding worm thread flank (161) of a grinding worm thread, and wherein deliberately varying the penetration depth (d) to produce the gear flank waviness comprises:
transferring the thread waviness of the grinding worm thread flank (161) to the tooth flank of the pre-toothed workpiece (23) that is in rolling engagement with the grinding worm (16).

7. The method of claim 6, further comprising:
dressing the grinding worm (16) with a dressing tool (33), wherein the dressing tool (33) exhibits radial runout and/or axial runout and wherein a fixed or variable rotational angle ratio between the dressing tool (33) and the grinding worm (16) is predetermined such that the radial runout and/or the axial runout produces the thread waviness on the grinding worm thread flank (161).

8. The method of claim 6 or 7,
wherein the grinding worm (16) has at least two grinding worm threads,
wherein each of the at least two grinding worm threads has a respective thread waviness along a worm contact path, and
wherein the at least two grinding worm threads each produce adjacent contact tracks on the tooth flank, each contact track on the tooth flank being associated with one of the at least two worm contact paths, and
wherein the thread waviness generated on the respective grinding worm threads along the worm contact paths preferably differ from each other.

9. The method of claim 8, wherein the worm contact paths each have a worm contact path starting point which is associated with a contact track starting point of the respective contact track on the tooth flank, wherein the thread waviness of the at least two grinding worm threads at the respective worm contact path starting point are out of phase with each other.

10. The method of claim 8 or 9, wherein the thread waviness of the at least two grinding worm threads have a difference in wavelength, and/or
wherein the thread waviness of the at least two grinding worm threads have a difference in waviness amplitude.

11. The method of any one of the preceding claims,
wherein the grinding worm (16) has at least two grinding worm threads, the method further comprising:
dressing one of the grinding worm threads of the grinding worm (16) with a constant axial pitch error to produce a protruding grinding worm thread, the axial pitch error being chosen such that the protruding grinding worm thread achieves a greater penetration depth (d) than its preceding and succeeding grinding worm threads with respect to a meshing sequence on the tooth flank, such that the protruding grinding worm thread at least partially grinds over the contact tacks produced by its preceding grinding worm threads.

12. The method of any one of the preceding claims, wherein the deliberate variation of the penetration depth is superimposed with uncontrolled, in particular stochastically occurring, deviations of the penetration depth (d), and wherein the deliberate variation of the penetration depth (d) is carried out with a modulation amplitude which lies in a range between 0.2 times and 5 times a fluctuation measure for the uncontrolled deviations of the penetration depth (d),
wherein the fluctuation measure corresponds in particular to a standard deviation or an interquartile range of the uncontrolled deviations of the penetration depth (d),
in particular, wherein the fluctuation measure of the uncontrolled deviations of the penetration depth (d) is determined and the modulation amplitude is specifically chosen as a function of the determined fluctuation measure.

13. A machine tool, comprising:
a tool spindle (15) which is configured to receive a grinding worm (16) for rotation about a worm axis (B);
a workpiece spindle (21) which is configured to receive a pre-toothed workpiece (23) for rotation about a workpiece axis (C1);
an axial slide (13) with an axial drive for generating a relative movement between the tool spindle (15) and the workpiece spindle (21), the relative movement having an axial component parallel to the workpiece axis (C1), and
a controller configured to perform the method of any one of claims 1 to 12.

14. The machine tool of claim 13, comprising a shift slide (14) with a shift drive for generating a displacement of the grinding worm (16) in a shift direction (Y) parallel to the worm axis (B),
wherein the shift drive is configured to excite a translational vibration of the shift slide (14) in the shift direction (Y), and/or
wherein the axial drive is configured to excite a translational vibration of the axial slide (13) with a vibration component parallel to the workpiece axis (C1), and/or
wherein the tool spindle (15) is configured to excite a torsional vibration of the grinding worm (16) about the worm axis (B), and/or
wherein the machine tool (1) has a tool carrier (12) with a tool carrier drive for generating an infeed movement of the grinding worm (16) in an infeed direction (X) radial to the workpiece axis (C1), wherein the tool carrier drive is configured to excite a translational vibration of the grinding worm (16) in the infeed direction (X); and/or
wherein the machine tool (1) has at least one separate tool vibration module (151) which is configured to excite a translational vibration of the shift slide (14) and/or the tool spindle (21) in the shift direction (Y), and/or
which is configured to excite a translational vibration of the axial slide (13) with a vibration component parallel to the workpiece axis (C1), and/or
which is configured to excite a translational vibration of the tool carrier (12) in the infeed direction (X), and/or
which is configured to excite a torsional vibration of the tool spindle (15) about the worm axis (B).

15. The machine tool according of claim 13 or 14, comprising a workpiece spindle drive (211) for driving the workpiece spindle (21),
wherein the workpiece spindle drive is configured to excite a torsional vibration and/or a bending vibration and/or a translational vibration of the workpiece spindle (21); and/or
wherein the machine tool (1) has at least one separate workpiece vibration module (212) which is configured to excite a torsional vibration and/or a bending vibration and/or a translational vibration of the workpiece spindle (21).

## Revendications

1. Procédé pour générer une structure de surface modifiée sur un flanc de dent d'une pièce à usiner pré-dentée (23),
ledit procédé comprenant :
l'entraînement d'une vis sans fin de meulage (16) en rotation autour d'un axe de vis sans fin (B) ;
l'entraînement de la pièce pré-dentée (23) en rotation autour d'un axe de pièce à usiner (C1), la vis sans fin de meulage (16) et la pièce à usiner pré-dentée (23) étant en prise par roulement ;
la création d'un mouvement relatif entre la vis sans fin de meulage (16) et la pièce à usiner pré-dentée (23), ce mouvement relatif présentant une composante axiale parallèle à l'axe de la pièce à usiner (C1), de telle sorte qu'une pluralité de pistes de contact adjacentes se forme sur le flanc de dent de la pièce à usiner pré-dentée (23), les pistes de contact s'étendant à distance les unes des autres par rapport à une direction de largeur de la pièce à usiner,
**caractérisé en ce que** le procédé comprend en outre :
variation ciblée d'une profondeur de pénétration (d) entre la vis sans fin de meulage (16) et la pièce à usiner pré-dentée (23) le long de la piste de contact respective afin de générer une ondulation du flanc de dent présentant une pluralité de périodes d'onde le long de ladite piste de contact, de telle sorte que les ondulations du flanc de dent de pistes de contact adjacentes soient décalées les unes par rapport aux autres d'un déphasage à une position prédéfinie quelconque dans le sens de la hauteur de la pièce à usiner,
le déphasage étant compris entre 90° et 270°, et/ou
le déphasage par rapport aux traces de contact respectivement adjacentes variant d'une piste de contact à l'autre, et/ou
le déphasage par rapport aux pistes de contact adjacentes variant le long de chaque piste de contact.

2. Procédé selon la revendication 1, dans lequel la vis sans fin de meulage (16) tourne à une fréquence de rotation de la vis sans fin (fₛ) et dans lequel la variation ciblée de la profondeur de pénétration (d) s'effectue à une fréquence de variation (fᵥ) supérieure à la fréquence de rotation de la vis sans fin (fₛ).

3. Procédé selon la revendication 1 ou 2, dans lequel la variation ciblée de la profondeur de pénétration (d) comprend :
la génération d'un mouvement relatif supplémentaire contrôlé entre la pièce à usiner pré-dentée (23) et la vis sans fin de meulage (16).

4. Procédé selon la revendication 3, dans lequel la génération du mouvement relatif supplémentaire ciblé comprend :
stimulation d'une oscillation en translation de la vis sans fin de meulage (16) avec une composante d'oscillation dans une direction d'avance (X) radiale par rapport à l'axe de la pièce à usiner (C1), et/ou
stimulation d'une oscillation en translation de la vis sans fin de meulage (16) avec une composante d'oscillation parallèle à l'axe de la pièce à usiner (C1), et/ou
stimulation d'une oscillation en translation de la vis sans fin de meulage (16) avec une composante d'oscillation dans une direction de décalage (Y) parallèle à l'axe de la vis sans fin (B), et/ou
stimulation d'une oscillation de torsion de la vis sans fin de meulage autour de l'axe (B) de la vis sans fin de meulage.

5. Procédé selon la revendication 3 ou 4, dans lequel la pièce à usiner pré-dentée (23) est disposée sur une broche porte-pièce (21) et dans lequel la génération du mouvement relatif supplémentaire ciblé comprend :
stimulation d'une vibration de torsion de la broche porte-pièce (21) autour de l'axe de la pièce à usiner (C1), et/ou
stimulation d'une oscillation de flexion de la broche porte-pièce (21), et/ou
stimulation d'une oscillation de translation de la broche porte-pièce (21).

6. Procédé selon l'une des revendications précédentes, dans lequel la vis sans fin de meulage (16) présente une ondulation de filet sur un flanc de filet de vis sans fin de meulage (161) d'un filet de vis sans fin de meulage, et dans lequel la variation ciblée de la profondeur de pénétration (d) pour générer l'ondulation du flanc de dent comprend :
la transmission de l'ondulation de filet du flanc de filet de vis sans fin de meulage (161) sur le flanc de dent de la pièce à usiner pré-dentée (23) étant en prise par roulement avec la vis sans fin de meulage (16).

7. Procédé selon la revendication 6, comprenant en outre :
le dressage de la vis sans fin de meulage (16) à l'aide d'un outil de dressage (33), l'outil de dressage (33) présentant un écart de concentricité et/ou un écart de planéité, et un rapport d'angle de rotation fixe ou variable étant défini entre l'outil de dressage (33) et la vis sans fin de meulage (16), de telle sorte que l'écart de concentricité et/ou l'écart de planéité génèrent l'ondulation de filet sur le flanc de la vis sans fin de meulage (161).

8. Procédé selon la revendication 6 ou 7,
dans lequel la vis sans fin de meulage (16) comporte au moins deux filets de vis sans fin de meulage,
chacun des au moins deux filets de la vis sans fin de meulage présentant respectivement une ondulation de filet le long d'une trajectoire de contact de la vis sans fin, et
lesdits au moins deux filets de vis sans fin de meulage produisant respectivement des pistes de contact adjacentes sur le flanc de dent, chaque piste de contact sur le flanc de dent étant associée à l'une desdites au moins deux trajectoires de contact de vis sans fin, et
les ondulations de filet générées sur les filets de vis sans fin de meulage concernés, étant de préférence différentes le long des trajectoires de contact de vis sans fin.

9. Procédé selon la revendication 8, dans lequel les trajectoires de contact de vis sans fin comportent chacune un point de départ de trajectoire de contact de vis sans fin, qui est associé à un point de départ de trace de contact de la trace de contact correspondante sur le flanc de dent, les ondulations de filet des au moins deux filets de vis sans fin de meulage étant déphasées les unes par rapport aux autres au niveau du point de départ de trajectoire de contact de vis sans fin correspondant.

10. Procédé selon la revendication 8 ou 9, dans lequel les ondulations de filet des au moins deux filets de vis sans fin de meulage présentent une différence de longueur d'onde, et/ou
dans lequel les ondulations de filet des au moins deux filets de vis sans fin de meulage présentent une différence d'amplitude d'ondulation.

11. Procédé selon l'une des revendications précédentes,
dans lequel la vis sans fin de meulage (16) comporte au moins deux filets de vis sans fin de meulage, le procédé comprenant en outre :
dressage d'un des filets de la vis sans fin de meulage de la vis sans fin de meulage (16) avec un défaut de pas constant afin de générer un filet de vis sans fin en saillie, le défaut de pas étant choisi de telle sorte que le filet de vis sans fin en saillie présente une profondeur de pénétration (d) supérieure aux filets de la vis sans fin de meulage qui la précèdent et la suivent dans la séquence d'engrènement sur le flanc de dent, de telle sorte que le filet de vis sans fin en saillie de la vis sans fin de meulage rectifie au moins partiellement les pistes de contact laissées par les filets de la vis sans fin de meulage qui le précèdent.

12. Procédé selon l'une des revendications précédentes, dans lequel la variation ciblée de la profondeur de pénétration est superposée à des écarts non contrôlés, notamment de nature stochastique, de la profondeur de pénétration (d), et dans lequel la variation ciblée de la profondeur de pénétration (d) s'effectue avec une amplitude de modulation comprise dans une plage allant de 0,2 à 5 fois une mesure de variation pour les écarts non contrôlés de la profondeur de pénétration (d),
la mesure de variation correspondant notamment à un écart-type ou à un écart interquartile des variations non contrôlées de la profondeur de pénétration (d),
en particulier, la mesure de variation des écarts non contrôlés de la profondeur de pénétration (d) étant déterminée et l'amplitude de modulation étant choisie de manière ciblée en fonction de la mesure de variation déterminée.

13. Machine-outil, comprenant :
une broche porte-outil (15) conçue pour recevoir une vis sans fin de meulage (16) en rotation autour d'un axe de vis sans fin (B) ;
une broche porte-pièce (21) conçue pour recevoir une pièce à usiner pré-dentée (23) en rotation autour d'un axe de pièce à usiner (C1) ;
un chariot axial (13) muni d'un entraînement axial pour générer un mouvement relatif entre la broche porte-outil (15) et la broche porte-pièce (21), ledit mouvement relatif présentant une composante axiale parallèle à l'axe de la pièce à usiner (C1), et
une commande conçue pour exécuter le procédé selon l'une des revendications 1 à 12.

14. Machine-outil selon la revendication 13, comprenant un chariot de décalage (14) muni d'un entraînement de décalage destiné à provoquer un déplacement de la vis sans fin de meulage (16) dans une direction de décalage (Y) parallèle à l'axe de la vis sans fin (B),
l'entraînement de décalage étant conçu pour amener le chariot de décalage (14) en une oscillation translatoire dans la direction de décalage (Y), et/ou
l'entraînement axial étant conçu pour amener le chariot axial (13) en une oscillation translatoire comportant une composante d'oscillation parallèle à l'axe de la pièce à usiner (C1), et/ou
la broche porte-outil (15) étant conçue pour amener la vis sans fin de meulage (16) en une oscillation de torsion autour de l'axe de la vis sans fin (B), et/ou
la machine-outil (1) comporte un porte-outil (12) muni d'un entraînement de porte-outil destiné à générer un mouvement d'avance de la vis sans fin de meulage (16) dans une direction d'avance (X) radiale par rapport à l'axe (C1) de la pièce à usiner, l'entraînement de porte-outil étant conçu pour amener la vis sans fin de meulage (16) en une oscillation translatoire dans la direction d'avance (X) ; et/ou
la machine-outil (1) comportant au moins un module d'oscillation d'outil (151) séparé, qui est conçu pour amener le chariot de décalage (14) et/ou la broche d'outil (21) en une oscillation translatoire dans la direction de décalage (Y), et/ou
qui est conçu pour amener le chariot axial (13) en une oscillation translatoire avec une composante d'oscillation parallèle à l'axe de la pièce à usiner (C1), et/ou
qui est conçu pour amener le porte-outil (12) en une oscillation translatoire dans la direction d'avance (X), et/ou
qui est conçu pour amener la broche porte-outil (15) en une oscillation de torsion autour de l'axe de la vis sans fin (B).

15. Machine-outil selon la revendication 13 ou 14, comprenant un entraînement de broche porte-pièce (211) destiné à entraîner la broche porte-pièce (21),
l'entraînement de la broche porte-pièce étant conçu pour amener la broche porte-pièce (21) en une vibration de torsion et/ou une vibration de flexion et/ou une vibration de translation ; et/ou
la machine-outil (1) comportant au moins un module de vibration de pièce à usiner (212) distinct, conçu pour amener la broche porte-pièce (21) en une vibration de torsion et/ou une vibration de flexion et/ou une vibration de translation.
